# FASCICULE DE BREVET EUROPEEN

(11) **EP 4 226 135 B1**
(45) Date de publication et mention de la délivrance du brevet: **12.08.2026**
(21) Numéro de dépôt: 21801969.3
(22) Date de dépôt: 05.10.2021
(51) Int. Cl.: G01M 9/06, G01M 17/007

(54) **MÉTHODE DE DÉTERMINATION DE LA SURFACE DE TRAINÉE AÉRODYNAMIQUE ET/OU DU COEFFICIENT DE ROULEMENT D'UN VÉHICULE, ET DISPOSITIF DE MESURE ASSOCIÉ**
VERFAHREN ZUR BESTIMMUNG DER AERODYNAMISCHEN WIDERSTANDSFLÄCHE UND/ODER DES ROLLKOEFFIZIENTEN EINES FAHRZEUGS UND ZUGEHÖRIGE MESSVORRICHTUNG
METHOD FOR DETERMINING THE AERODYNAMIC DRAG SURFACE AND/OR THE ROLLING COEFFICIENT OF A VEHICLE, AND ASSOCIATED MEASURING DEVICE

(30) Priorité: 08.10.2020 FR 2010298
(43) Date de publication de la demande: 16.08.2023
(73) Titulaire: Aeroscale, 38000 Grenoble (FR)
(72) Inventeur: SELLIER, Manuel, 38000 GRENOBLE (FR)
(74) Mandataire: IP Trust
(86) Numéro de dépôt international: PCT/FR2021/051725
(87) Numéro de publication internationale: WO 2022/074330

(56) Documents cités:
- WO-A1-2017/055759
- FR-A1- 2 725 520
- US-A1- 2020 254 307

## Description

### DOMAINE DE L'INVENTION

La présente invention concerne le domaine des dispositifs et procédés de mesure et de détermination des forces s'exerçant sur un véhicule en mouvement. L'invention vise particulièrement à déterminer la surface de trainée aérodynamique et/ou le coefficient de roulement d'un cycliste sur son bicycle, avec précision, reproductibilité et en mettant en œuvre un protocole simple et rapide.

### ARRIERE PLAN TECHNOLOGIQUE DE L'INVENTION

Mesurer précisément les paramètres clés de friction du cycliste (roulement et aérodynamisme) reste un défi majeur pour l'industrie du cycle. Deux catégories principales de test peuvent être envisagées : les tests à l'arrêt et les tests en mouvement.

Pour les tests à l'arrêt, le principe général est de mettre en mouvement l'air ou bien le sol de manière fictive avec le vélo (et potentiellement le cycliste) physiquement à l'arrêt. Ces méthodes nécessitent une forme de laboratoire avec une instrumentation dédiée de manière à mesurer précisément certaines forces. L'avantage est de permettre une mesure indépendante des paramètres de roulement et d'aérodynamisme. L'instrument de choix pour la mesure de l'aérodynamisme est la soufflerie alors qu'un système de tambours en mouvement est souvent privilégié pour la mesure du roulement. L'inconvénient est que ce type de méthodologie introduit des biais de mesure. La soufflerie a ainsi du mal à reproduire la nature intrinsèquement turbulente de l'air extérieur ; les tambours introduisent des biais de mesure par rapport à la diversité des routes et des conditions de température que le cycliste est amené à emprunter en extérieur. Ces méthodes de laboratoire ont par ailleurs comme inconvénient majeur d'être très couteuses et peu faciles d'accès pour le grand public.

Au contraire des tests à l'arrêt, les tests en mouvement visent à mettre le cycliste et son vélo dans des conditions réelles de mouvement. Certains paramètres régissant le mouvement sont alors mesurés précisément de manière à déduire les coefficients de roulement et aérodynamiques du cycliste sur son vélo. Les difficultés principales résident dans la discrimination des paramètres de roulement et d'aérodynamisme dont la résultante est une force globale de friction, en pratique impossible à discerner à vitesse constante.

En effet, un cycliste en mouvement est soumis à plusieurs forces :
- La force de la pesanteur : ${F}_{poids} = - m g p$

Avec m la masse du cycliste, g l'accélération de la pesanteur et p la pente de la route, la pente moyenne pouvant s'exprimer à partir de H et L, respectivement la hauteur (ou dénivelé) et la longueur du tronçon de route parcouru.
- La force de friction sèche (force de roulement) : ${F}_{roulement} = - m g {C}_{r}$

Avec Cᵣ le coefficient de roulement (sans unité).
- La force de friction fluide (force de friction avec l'air) :

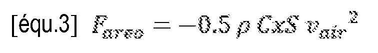

Avec ρ la densité de l'air, vₐᵢᵣ la vitesse de l'air par rapport au cycliste soit la vitesse v du véhicule plus la vitesse du vent, Cx le facteur de forme du véhicule, S la surface frontale.
- La force d'avancement (force exercée par le cycliste sur les pédales) : ${F}_{avancement} = \frac{P}{v}$

Avec P la puissance motrice transmise aux roues et v la vitesse du véhicule.

Selon l'équation fondamentale de la dynamique :

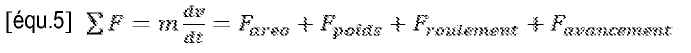

Dans le but de minimiser le coût énergétique du mouvement du véhicule, il apparait particulièrement clé de savoir mesurer avec précision les frictions s'appliquant au cycliste (roulement et aérodynamisme) exprimés à travers les paramètres Cᵣ, coefficient de roulement, et CxS, surface de trainée aérodynamique.

Or, nous voyons que l'équation qui régit le mouvement d'un cycliste fait intervenir de multiples paramètres m, ρ, vₐᵢᵣ, v, CxS, Cᵣ, H et L.

Toutes les méthodes présentées ci-après font l'hypothèse d'une masse m connue du véhicule et d'une densité ρ de l'air connue également. En revanche, afin de discriminer Cᵣ et CxS lors d'un ou plusieurs mouvement(s) test(s), différentes stratégies sont employées pour se passer de la connaissance d'une ou plusieurs variables restantes (H, vₐᵢᵣ, v, CxS, Cᵣ, L).

Le document FR2725520 propose une méthode consistant à effectuer plusieurs roues libres, en lieu clos, sur route plate, en relevant très précisément la vitesse de décélération (typiquement par bandes de pression disposées sur le sol, espacées respectivement de 1m et 20m avec détection à 30µs). Ce protocole permet d'effectuer plusieurs simplifications. En effet, en effectuant un déplacement sur circuit clos, parfaitement plan et de revêtement constant (comme un vélodrome, un hangar ou un gymnase par exemple), la hauteur peut être supposée nulle et le coefficient de roulement constant. De plus, en se plaçant dans un lieu clos et non ventilé, vₐᵢᵣ peut être assimilé à la vitesse du cycliste v. Enfin, en se plaçant en condition de roue libre (décélération sans appliquer de force motrice), la force motrice peut être supposée nulle et seule l'inertie fait avancer le cycliste. Sur la base de ces hypothèses, une équation analytique du mouvement peut être déduite : 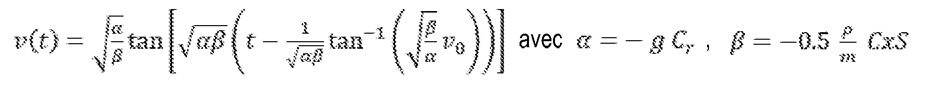 et *v*₀ la vitesse initiale.

En mesurant très précisément le mouvement (vitesse ou distance et temps de passage en certains points à l'aide de bandes de mesures ou bien de radar de vitesse), les paramètres α et β peuvent être approximés de manière à déduire Cᵣ et CxS.

Des variabilités relativement faibles de mesures ont pu être obtenues via cette méthode en multipliant les décélérations (écarts types de 0.56% et 0.59% sur CxS et Cᵣ respectivement par séries de 30 décélérations). Cependant, la difficulté de mise en œuvre (répétition des tests, hangar fermé, installation de l'appareillage de mesure) rend cette méthode globalement peu attractive malgré la fiabilité des résultats obtenus.

Le document WO2007038278 propose une solution voisine basée sur des tests de décélération mais cette fois en extérieur, avec mesure du vent et de l'altitude. Elle consiste à faire correspondre au mieux une équation théorique de mouvement à la réalité lors d'un test de roue libre en extérieur en ajustant les paramètres CxS et Cᵣ. Dans ce protocole, le vent par rapport au sol et l'inclinaison de la route sont mesurés via un dispositif embarqué et ne sont plus supposés nuls.

Cette solution ne permet pas d'atteindre des résultats précis. Les sources d'imprécisions sont multiples. En effet, le tachymètre embarqué (à 1Hz d'échantillonnage) introduit trop d'incertitudes pour décrire correctement un mouvement court par définition (roue libre de moins de 100m). La mesure d'altitude est aussi sujette à trop d'imprécisions. En effet, elle se base sur un inclinomètre dont la valeur est susceptible de varier en fonction de l'appui sur le vélo et dont l'étalonnage est compliqué à réaliser en condition réelle (vélo + cycliste).

Une autre solution est basée sur des tests de régression. Il s'agit d'effectuer de multiples allers/retours (typiquement une dizaine), à vitesses croissantes, sur une portion de route plate non exposée au vent et de revêtement constant (typiquement 1 km). Dans le cas d'un vélodrome, les tests requièrent d'effectuer plusieurs tours de piste à vitesse croissante (J. Martin, A. Gardner, M. Barras, et al., « Aerodynamic drag area of cyclists determined with field-based measures », Sportscience 10 2006 68-69). Chaque tour ou portion est effectué à la vitesse la plus constante possible et l'énergie dépensée par tronçon ou tour de piste est mesurée grâce à un wattmètre. L'établissement de la relation liant l'énergie développée et la vitesse du tronçon élevée au carré permet de calculer précisément CxS et Cᵣ.

Les tests de régression ont prouvé pouvoir mesurer des différences très petites de CxS, de l'ordre de 1.5%. Cependant ils sont très fastidieux à mettre en œuvre car ils nécessitent au moins une dizaine de kilomètres de parcours test, à différentes vitesses. Un résultat ne peut ainsi être concrètement obtenu en moins de 30 minutes.

Dans la même idée que précédemment, en supposant Cᵣ connu (par exemple par test de régression), il est possible de connaître CxS en effectuant juste un aller/retour en extérieur sur un parcours test plat à vitesse constante. Dans ce cas, le vent pourra être supposé constant et non nul.

Ce type de protocole est actuellement proposé (https://www.aerotune.com/), avec des préconisations d'utilisation dans des conditions de vent faible et de dénivelé de la route inférieur à 0.5%. Il est en outre recommandé d'effectuer 3 allers/retours par test, de manière à moyenner les incertitudes, ce qui implique des procédures relativement longues d'au moins 15-20 minutes par test.

Au-delà de sa lourdeur de mise en œuvre une vraie question réside sur la précision de ce protocole si les conditions de vent constant ne sont pas respectées (variation du vent ou autre véhicule sur le parcours pendant le test, par exemple).

On connaît par ailleurs la méthode d'élévation virtuelle sur circuit fermé dite « Méthode de Chung » (cf publication « Estimating CdA with a power meter » de R.Chung, version mise à jour en mars 2012). Elle consiste à recalculer une altitude dite virtuelle sur un parcours fermé sans vent ni véhicule extérieur, effectué plusieurs fois, sans freiner, en faisant des hypothèses sur la trainée aérodynamique et le coefficient de roulement Cr. La vitesse du véhicule (cycliste sur son vélo), la puissance développée par le cycliste et potentiellement la vitesse du vent sont mesurées par des capteurs. La pente p, puis le dénivelé H en chaque point du circuit peuvent alors être recalculée en faisait des hypothèses sur Cr et CxS : $p \left(t\right) = - \frac{1}{g} \frac{dv \left(t\right)}{dt} + \frac{P \left(t\right)}{mgv} - {C}_{r} - 0.5 \frac{ρ CxS}{mg} {v}_{air} {\left(t\right)}^{2}$ $H \left(T\right) = {\int }_{0}^{T} p \left(t\right) dt$

Les valeurs réalistes de CxS et Cr sont celles qui permettent d'obtenir une élévation virtuelle identique pour chacun des parcours effectués.

Cette méthode a été démocratisée par sa mise en œuvre dans des applications smartphones, permettant la collecte de données émanant de nombreux capteurs présents sur le vélo. On connait également le document GB2568885A qui présente la réalisation d'un dispositif permettant de l'implémenter à l'aide d'un anémomètre attaché à la fourche du vélo. La méthode de Chung implique néanmoins plusieurs contraintes ; d'abord, il faut pouvoir effectuer un parcours en boucle fermée sans freiner, et ceci en toute sécurité et sans véhicule extérieur : en pratique, des parcours en cuvette entre deux ronds-points sans virage important. Ce genre de parcours est très difficile à trouver, surtout en zone urbaine. Par ailleurs, cette méthode ne dit pas précisément comment discriminer les termes CxS et Cr. La solution trouvée est en effet un couple possible (CxS, Cr). En fixant une hypothèse pour Cr, il est possible d'observer la variation relative de CxS pour différents essais. Cependant, la valeur absolue reste inaccessible. L'autre inconvénient de cette méthode réside dans la difficulté d'effectuer une multitude de parcours dans les conditions météorologiques requises (sans vent, lorsque ce dernier n'est pas mesuré) pour obtenir la meilleure précision de mesure.

On connaît du même auteur, le document US2012/0221257 décrivant une méthode de détermination de la surface de trainée aérodynamique CxS d'un véhicule en mouvement, en fonction des caractéristiques du vent. Cette méthode est notamment basée sur la mesure de la vitesse et de l'orientation du vent au cours du déplacement, ce qui la rend complexe à mettre en œuvre.

On connaît enfin du document WO2017/055759, une solution basée sur l'analyse de quatre déplacements (deux aller/retour) sur un trajet en extérieur, par exemple en condition de roue libre. Le vent est supposé constant. En particulier, un aller/retour est opéré à basse vitesse et un aller/retour est opéré à haute vitesse. Les valeurs de vitesse sont relevées très précisément pour chaque test grâce à un dispositif embarqué. Un algorithme permet de déduire les coefficients Cᵣ et CxS ainsi que le vent moyen vᵥₑₙₜ (vₐᵢᵣ - v) à partir de trois équations dérivées du principe de conservation de l'énergie et sur la base de trois contraintes sur les dénivelés du trajet. En pratique, des valeurs arbitraires des paramètres Cᵣ, CxS et vᵥₑₙₜ initialement fixées sont corrigées de façon itérative, en reliant les erreurs commises sur ces paramètres (ΔCᵣ, ΔCxS et Δvᵥₑₙₜ) avec les erreurs sur les altitudes qui ressortent des trois contraintes précitées. La résolution d'un tel système peut se faire par exemple par la méthode de Cramer et aboutit à l'obtention des corrections (ΔCᵣ, ΔCxS et Δvᵥₑₙₜ) à appliquer aux valeurs arbitraires des facteurs caractéristiques initialement injectées.

La méthode présente l'avantage de pouvoir être mise en œuvre en extérieur, sur un parcours exposé au vent. De plus, sa mise en œuvre est relativement courte (2 à 5 minutes par test maximum). Elle permet en outre de discriminer Cᵣ et CxS. Des écarts types de l'ordre de 2% pour le CxS et 4% pour le Cᵣ durant des tests de répétabilité ont été enregistrés par condition de vent calme.

Le principal inconvénient de cette méthode réside dans le fait qu'elle se base sur une hypothèse relativement forte qui est la constance du vent durant les quatre déplacements. Or, la durée du test (quelques minutes) est de l'ordre de grandeur du temps caractéristique de variation du vent par rapport au sol. C'est pourquoi des coefficients de variation supérieurs à 5% pour CxS peuvent être relevés par condition de vent fort.

### OBJET DE L'INVENTION

La présente invention vise à remédier à tout ou partie des inconvénients précités. Elle concerne une séquence préparatoire pour la détermination de la surface de trainée aérodynamique et du coefficient de roulement d'un véhicule, en particulier d'un cycliste sur son bicycle. L'invention concerne également des méthodes de détermination de l'un et/ou l'autre de ces paramètres clé de friction, basées sur ladite séquence préparatoire et offrant une excellente reproductibilité ainsi qu'une grande simplicité de mise en œuvre. Les méthodes de détermination selon l'invention sont particulièrement avantageuses dans le cas de trajets de test courts, typiquement inférieurs à 1km.

### BREVE DESCRIPTION DE L'INVENTION

L'invention concerne **une séquence préparatoire** pour la détermination de la surface de trainée aérodynamique et/ou du coefficient de roulement d'un véhicule en conditions réelles de déplacement, sans freinage, sur un tronçon de route défini présentant un point de départ et un point d'arrivée, la séquence préparatoire comprenant les étapes suivantes :
a) la définition d'une bande de circulation d'une largeur inférieure ou égale à 1m, le long dudit tronçon de route,
b) la réalisation par le véhicule d'un premier déplacement, sur le tronçon de route, du point de départ jusqu'au point d'arrivée, et dans la bande de circulation, au cours duquel sont mesurés les paramètres suivants :
   - la vitesse de l'air par rapport au véhicule, avec un anémomètre présentant une fréquence d'échantillonnage supérieure ou égale à 1Hz et une répétabilité de mesure inférieure à (ou meilleure que) 2% RMS pour une fréquence d'échantillonnage de 1Hz, ou
      la pression dynamique de l'air, avec un capteur de pression différentielle présentant une fréquence d'échantillonnage supérieure ou égale à 1Hz et une répétabilité de mesure meilleure que 4% RMS pour une fréquence d'échantillonnage de 1Hz,
   - la vitesse du véhicule aux points de départ et d'arrivée du tronçon de route, avec un capteur de vitesse présentant une répétabilité meilleure que 0.25% RMS,
   - l'énergie motrice fournie par le véhicule le long du tronçon de route, avec un capteur de puissance présentant une répétabilité meilleure que 1% RMS, ou la prise en compte d'une énergie motrice nulle si ledit déplacement est effectué en roue libre.

Selon d'autres caractéristiques avantageuses et non limitatives de l'invention, prises seules ou selon toute combinaison techniquement réalisable :
- la largeur de la bande de circulation est inférieure ou égale à 50cm, voire à 30cm, voire à 10cm ;
- le tronçon de route présente une longueur supérieure ou égale à 500m lorsqu'une énergie motrice est développée par le véhicule au cours du déplacement sur ledit tronçon ;
- le tronçon de route présente une longueur inférieure ou égale à 300m, préférentiellement de l'ordre de 100m, lorsque le déplacement sur ledit tronçon est effectué en roue libre ;
- le tronçon de route présente une déclivité descendante de l'ordre de 0 à -1%, et une longueur inférieure ou égale à 500m, préférentiellement de l'ordre de 200m, lorsque le déplacement sur ledit tronçon est effectué en roue libre ;
- la mesure de la vitesse du véhicule est basée sur un comptage du nombre de tours de roue dudit véhicule par unité de temps ;
- la mesure de la vitesse du véhicule met en œuvre un ou plusieurs aimant(s) disposé(s) sur la roue et un système de détection du nombre de passages du ou desdits aimant(s) par unité de temps, avec une fréquence d'échantillonnage supérieure ou égale à 2kHz ;
- la mesure de la vitesse du véhicule est obtenue à partir d'au moins deux bandes sensibles de détection de roue, disposées respectivement au niveau du point de départ et au niveau du point d'arrivée du tronçon de route, aptes à délivrer une impulsion électrique au passage du véhicule et couplées à un système de chronométrage présentant une fréquence d'échantillonnage supérieure 2kHz ;
- le déplacement de l'étape b) est précédé d'une phase d'élan, initiée en un point de mise en mouvement du véhicule situé à une distance connue du point de départ ou d'arrivée, ladite distance étant un multiple d'un ou d'une fraction de tour de roue, et un passage sur le point de départ ou sur le point d'arrivée du tronçon de route, lors du déplacement de l'étape b), est détecté précisément grâce à un comptage du nombre de tours de roue à partir du point de mise en mouvement
- un passage sur le point de départ ou sur le point d'arrivée du tronçon de route est détecté précisément grâce à un système de positionnement par satellite ;
- un passage sur le point de départ ou sur le point d'arrivée du tronçon de route est détecté précisément grâce à un système de balises radiofréquences positionnées aux points de départ et/ou d'arrivée.

L'invention concerne également cinq méthodes de détermination de la surface de trainée aérodynamique et/ou du coefficient de roulement.

**Une première méthode de détermination** de la surface de trainée aérodynamique met en œuvre la séquence préparatoire précitée, et comprend en outre l'étape suivante :
c) la détermination de la surface de trainée aérodynamique à partir d'une équation issue du principe de conservation de l'énergie, et à partir :
- de paramètres connus que sont la masse du véhicule, l'accélération de la pesanteur, la densité de l'air (si nécessaire), la longueur du tronçon, le dénivelé du tronçon,
- des paramètres mesurés au cours du premier déplacement, et
- du coefficient de roulement connu ou fixé arbitrairement.

**Une deuxième méthode de détermination** du coefficient de roulement, met en œuvre la séquence préparatoire précitée, et comprend l'étape suivante :
d) la détermination du coefficient de roulement à partir d'une équation issue du principe de conservation de l'énergie, et à partir :
- de paramètres connus que sont la masse du véhicule, l'accélération de la pesanteur, la densité de l'air (si nécessaire), la longueur du tronçon, le dénivelé du tronçon,
- des paramètres mesurés au cours du premier déplacement, et
- de la surface de trainée aérodynamique connue ou fixée arbitrairement.

**Une troisième méthode de détermination** de la surface de trainée aérodynamique, met en œuvre la séquence préparatoire précitée, et comprend les étapes suivantes :
b') la réalisation par le véhicule d'un deuxième déplacement, sur le tronçon de route, du point de départ jusqu'au point d'arrivée, et dans la bande de circulation, au cours duquel sont mesurés les mêmes paramètres qu'à l'étape b),
c') la détermination de la surface de trainée aérodynamique à partir d'une équation issue du principe de conservation de l'énergie, et à partir :
   - de paramètres connus que sont la masse du véhicule, l'accélération de la pesanteur, la densité de l'air (si nécessaire), la longueur du tronçon, et
   - des paramètres mesurés au cours des premier et deuxième déplacements.

**Une quatrième méthode de détermination** de la surface de trainée aérodynamique et du coefficient de roulement met en œuvre la séquence préparatoire précitée, et comprend en outre les étapes suivantes :
b') la réalisation par le véhicule d'un deuxième déplacement, sur le tronçon de route, du point de départ jusqu'au point d'arrivée, et dans la bande de circulation, au cours duquel sont mesurés les mêmes paramètres qu'à l'étape b),
e) la détermination de la surface de trainée aérodynamique et du coefficient de roulement à partir d'une équation issue du principe de conservation de l'énergie, et à partir :
   - de paramètres connus que sont la masse du véhicule, l'accélération de la pesanteur, la densité de l'air (si nécessaire), la longueur du tronçon, le dénivelé du tronçon,
   - des paramètres mesurés au cours des premier et deuxième déplacements.

**Une cinquième méthode de détermination** de la surface de trainée aérodynamique et du coefficient de roulement met en œuvre la séquence préparatoire précitée, et comprend en outre les étapes suivantes :
b") la réalisation par le véhicule d'un deuxième déplacement, sur le tronçon de route, du point d'arrivée jusqu'au point de départ, et dans la bande de circulation, au cours duquel sont mesurés les mêmes paramètres qu'à l'étape b),
b‴) la réalisation par le véhicule d'un troisième déplacement, sur le tronçon de route, du point de départ jusqu'au point d'arrivée, et dans la bande de circulation, au cours duquel sont mesurés les mêmes paramètres qu'à l'étape b) ;
e') la détermination de la surface de trainée aérodynamique et du coefficient de roulement à partir d'une équation issue du principe de conservation de l'énergie, et à partir :
   - de paramètres connus que sont la masse du véhicule, l'accélération de la pesanteur, la densité de l'air (si nécessaire), la longueur du tronçon, et
   - des paramètres mesurés au cours des premier, deuxième et troisième déplacements.

L'invention concerne enfin **un système intégré** pour la mise en œuvre d'une des méthodes précitées de détermination de la surface de trainée aérodynamique et/ou du coefficient de roulement d'un véhicule. Le système intégré comprend :
- un anémomètre, présentant une fréquence d'échantillonnage supérieure ou égale à 1Hz, pour la mesure de la vitesse de l'air par rapport au véhicule, ou un capteur de pression différentielle, présentant une fréquence d'échantillonnage supérieure ou égale à 1Hz, pour la mesure de la pression dynamique de l'air,
- un capteur de vitesse correspondant à un chronomètre associé à un interrupteur à lame souple, basé sur la détection du nombre de passage d'au moins un aimant disposé sur une roue du véhicule, avec une fréquence supérieure ou égale à 2kHz, pour la mesure de la vitesse du véhicule,
- un calculateur pour déterminer la surface de trainée aérodynamique et/ou du coefficient de roulement à partir des paramètres mesurés et de paramètres connus ou fixés arbitrairement préenregistrés.

Avantageusement, le système intégré comprend des moyens de communication à distance avec un téléphone portable ou un écran.

Il comprend, selon un mode préféré, une enveloppe aérodynamique dans laquelle sont intégrés l'anémomètre ou un ou plusieurs éléments de prise de pression du capteur de pression différentielle, le capteur de vitesse et le calculateur, l'enveloppe aérodynamique étant disposée à l'avant du véhicule.

### BREVE DESCRIPTION DES FIGURES

D'autres caractéristiques et avantages de l'invention ressortiront de la description détaillée de l'invention qui va suivre en référence aux figures annexées sur lesquelles :
[Fig. 1a], [Fig. 1b] Les figures 1a et 1b présentent une vue plane et une vue en coupe d'un tronçon de route sur lequel le véhicule va se déplacer pour la mise en œuvre de la séquence préparatoire et des méthodes de détermination des coefficients de frictions du véhicule, conformes à la présente invention ;
[Fig. 2] La figure 2 présente un résultat de valeur pour la surface de trainée aérodynamique CxS et le coefficient de roulement Cr, obtenus à partir de la cinquième méthode de détermination selon l'invention, pour une condition de test donnée ;
[Fig. 3] La figure 3 présente des résultats de valeurs de la surface de trainée aérodynamique CxS, obtenus à partir de la première méthode de détermination selon l'invention, pour cinq conditions de test différentes ;
[Fig. 4] La figure 4 présente une mise en œuvre possible d'un système intégré conforme à la présente invention, sur un guidon de vélo de contre-la-montre ;
[Fig. 5] La figure 5 présente des résultats de valeurs de surface de trainée aérodynamique CxS, obtenus lors de 16 essais réalisés dans des conditions de test identiques : 8 essais (selon l'invention) ont été effectués en respectant la bande de circulation et les valeurs CxS ont été obtenues à partir de la première méthode de détermination selon l'invention ; les 8 autres essais (hors invention) ont été effectués sans respecter la bande de circulation et les valeurs CxS ont été obtenues sur la même base de méthode de détermination.

Les figures sont des représentations schématiques qui, dans un objectif de lisibilité, ne sont pas nécessairement à l'échelle.

### DESCRIPTION DETAILLEE DE L'INVENTION

La présente invention concerne une séquence préparatoire pour la détermination de la surface de trainée aérodynamique CxS et/ou du coefficient de roulement Cr d'un véhicule en conditions réelles de déplacement. Cette séquence, qui prend la forme d'un procédé, est nommée préparatoire car elle constitue une étape essentielle et commune à des méthodes de détermination des coefficients de friction précités, lesdites méthodes étant également objets de la présente invention.

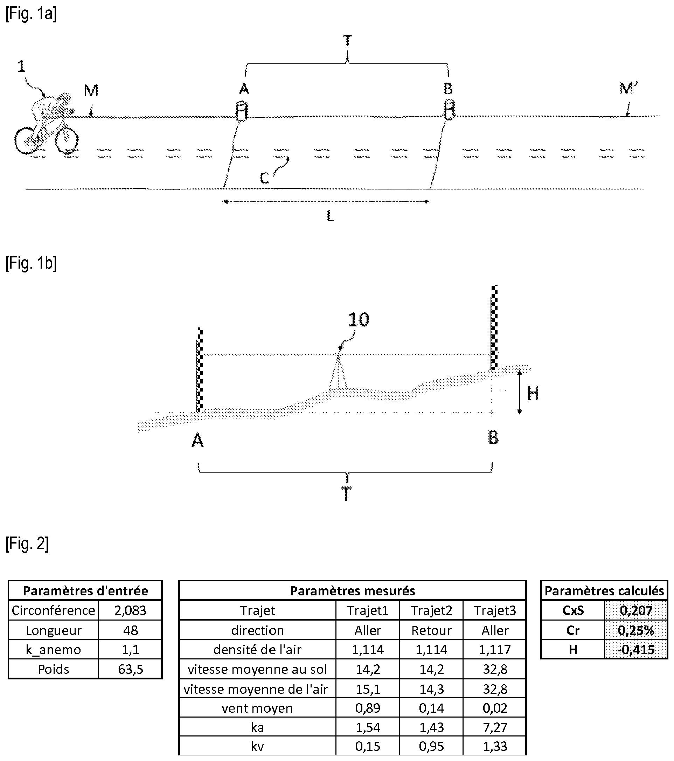

La séquence préparatoire et les méthodes de détermination s'appliquent tout particulièrement à un véhicule de type cycliste sur son bicycle 1 (figure 1a). Elles pourraient néanmoins s'appliquer à tout autre véhicule se déplaçant par apport d'énergie humaine ou mécanique, comme par exemple un véhicule roulant, flottant, glissant...

Selon l'invention, on vise à déterminer les coefficients de friction d'un véhicule, que sont la surface de trainée aérodynamique CxS et le coefficient de roulement Cr, en conditions réelles de déplacement, sans freinage, sur un tronçon de route T défini et présentant un point de départ A et un point d'arrivée B. Le point de départ A et le point d'arrivée B pourront par exemple être repérés par des balises sur le bord de la route et/ou des bandes collées ou peintes sur la route. Le tronçon de route T présente une longueur L et une hauteur (ou dénivelé), entre le point de départ A et le point d'arrivée B, notée H (figures 1a et 1b).

### Séquence préparatoire :

La séquence préparatoire comprend une première étape a) correspondant à la définition d'une bande de circulation C d'une largeur inférieure ou égale à 1m, le long du tronçon de route T. Avantageusement, la largeur de la bande de circulation est même inférieure ou égale à 50cm, voire à 30cm, voire à 10cm.

Cette première étape peut être effectuée en repérant la bande de circulation C, par exemple par des bandes adhésives ou des marques peintes le long du tronçon de route T. Alternativement, la bande de circulation C peut n'être matérialisée que par une seule bande ou ligne, continue ou discontinue, que le véhicule devra suivre au plus juste : en pratique, le véhicule reste ainsi dans une bande de circulation C de largeur inférieure à 50cm.

Bien sûr, la définition d'une bande de circulation C peut être effectuée par toute autre technique garantissant que le véhicule circule, le long du tronçon de route T, dans une bande de largeur inférieure ou égale à 1m, comme énoncé précédemment. Dit autrement, on souhaite garantir que le véhicule ne dévie pas, le long du tronçon de route T, de sa trajectoire de plus de 50cm.

La séquence préparatoire comprend ensuite une deuxième étape b) au cours de laquelle le véhicule réalise un premier déplacement, sur le tronçon de route T, du point de départ A jusqu'au point d'arrivée B, et dans la bande de circulation C.

Ce déplacement est réalisé dans des conditions de test particulières, c'est-à-dire une configuration particulière du véhicule. Appliqué à un cycliste sur son bicycle, les conditions de test sont définies notamment par un bicycle particulier (roues, guidon, matériaux...), une posture du cycliste, des vêtements et un casque portés par ce dernier, etc.

Au cours du premier déplacement, plusieurs paramètres sont mesurés. La vitesse de l'air vₐᵢᵣ par rapport au véhicule doit être mesurée à l'aide d'un capteur anémométrique présentant une fréquence d'échantillonnage supérieure ou égale à 1Hz, ou supérieure ou égale à 2Hz, ou supérieure ou égale à 4Hz, ou supérieure ou égale à 6Hz, ou supérieure ou égale à 8Hz, ou supérieure ou égale à 10Hz, et une répétabilité de mesure meilleure que 2% RMS à une fréquence d'échantillonnage de 1Hz. Cela signifie concrètement que l'écart type de la différence entre deux mesures concurrentes de la vitesse de l'air à la fréquence d'échantillonnage de 1Hz sur un même bicycle en mouvement, lors d'un même déplacement, ne devra pas dépasser 2.8% (2% x racine(2)). Pour une fréquence d'échantillonnage supérieure à 1Hz, on pourra tolérer une répétabilité de mesure sensiblement supérieure : par exemple pour une fréquence de 4Hz, une répétabilité de mesure meilleure que 4%RMS (soit 2%RMS fois la racine de la fréquence d'échantillonnage) est requise. Notons que la vitesse de l'air vₐᵢᵣ correspond à la vitesse du véhicule v, si le déplacement est effectué dans un lieu clos à l'abri du vent.

Alternativement à la mesure de la vitesse de l'air, il est possible de mesurer la différence entre la pression totale et la pression statique de l'air, grâce à une capteur de pression différentielle. Cette différence de pression d'air, mesurée lors du déplacement du bicycle, correspond à la pression dynamique de l'air. Le capteur de pression différentielle doit présenter une fréquence d'échantillonnage supérieure ou égale à 1Hz, ou supérieure ou égale à 2Hz, ou supérieure ou égale à 4Hz, ou supérieure ou égale à 6Hz, ou supérieure ou égale à 8Hz, ou supérieure ou égale à 10Hz, et une répétabilité de la mesure meilleure que 4% RMS à une fréquence d'échantillonnage de 1Hz. Cela signifie que l'écart type de la différence entre deux mesures concurrentes de la pression dynamique à la fréquence d'échantillonnage de 1Hz sur un même bicycle en mouvement, lors d'un même déplacement, ne devra pas dépasser 5,6% (4% x racine(2)). Pour une fréquence d'échantillonnage supérieure à 1Hz, on pourra tolérer une répétabilité de mesure sensiblement supérieure, comme évoqué précédemment.

Au cours du premier déplacement, la vitesse du véhicule v aux points de départ A et d'arrivée B du tronçon doit également être mesurée avec une répétabilité meilleure que 0.25% RMS. Cela signifie que l'écart type de la différence entre deux mesures de vitesse concurrentes du même bicycle en mouvement, lors d'un même déplacement, ne devra pas dépasser 0,35% (0,25% x racine(2)).

Enfin, l'énergie motrice Wₘₒₜ fournie par le véhicule le long du tronçon, est également mesurée, avec une répétabilité meilleure que 1% RMS ; si le déplacement est effectué en roue libre, la mesure de l'énergie motrice n'est pas requise et une énergie motrice nulle est considérée. La répétabilité pourra être vérifiée en mettant en concurrence le système de mesure d'énergie utilisé avec un capteur de puissance de référence, disponible dans le commerce, de type SRM ou Verve Infocranck. La variabilité de la différence d'énergie mesurée entre le système de mesure d'énergie et le capteur de puissance de référence sur de multiples trajets ne devant pas dépasser un écart type de 1% x racine(2), soit 1.4%.

Selon l'invention, les paramètres mesurés au cours du déplacement doivent l'être dans des conditions strictes de répétabilité, ce qui impose des performances de répétabilité des capteurs utilisés. Rappelons qu'une erreur aléatoire est toujours présente dans une mesure et est étroitement liée au concept de précision du capteur utilisé. Plus la précision d'un capteur est élevée, plus la variabilité des fluctuations, liées à une erreur aléatoire, de ses mesures est faible, et meilleure est la répétabilité de mesure du capteur. L'erreur aléatoire est causée par des fluctuations intrinsèquement imprévisibles dans les capteurs. Des erreurs aléatoires apparaissent comme des résultats différents pour apparemment la même mesure répétée. Ces erreurs ont tendance à être distribuées normalement en raison du théorème central limite car l'erreur stochastique est souvent la somme de nombreuses erreurs aléatoires indépendantes. Elles peuvent être estimées en évaluant la répétabilité de multiples mesures d'un phénomène stable, ou lorsque le phénomène mesuré n'est pas parfaitement stable - comme dans le cas d'un cycliste mis en mouvement par ses propres moyens - en mettant en concurrence deux mesures simultanées du même phénomène.

Prenons deux capteurs X et Y fournissant des mesures Xₘₑₛ et Yₘₑₛ d'un même paramètre Z. Supposons ces capteurs identiques et affectés d'une erreur aléatoire de même intensité normalement distribuée. Cela signifie que les erreurs de mesure Xₑᵣᵣ = Xₘₑₛ - Z et Yₑᵣᵣ = Yₘₑₛ - Z suivent toutes deux une loi de probabilité normale N(µ_{sysX}, σ²) et N(µ_{sysY}, σ²) avec µ_{sysX} et µ_{sysY}, les erreurs systématiques et σ l'écart-type correspondant à l'erreur aléatoire. La répétabilité de la mesure d'un capteur au sens de la présente invention se traduit par la contribution de l'erreur aléatoire : une répétabilité de mesure du paramètre Z, meilleure que 2% RMS signifie que σ est inférieur ou égal à 2%, soit σ ≤ 0,02 x Z.

En pratique, il est parfois plus simple et pragmatique de mettre en concurrence deux mesures simultanées du même paramètre Z par deux capteurs identiques X et Y pour évaluer l'écart-type σ traduisant l'erreur aléatoire. La différence des mesures Xₘₑₛ - Yₘₑₛ suit une loi de probabilité normale N(µ_{sysX} - µ_{sysY}, 2σ²). En évaluant Xₘₑₛ - Yₘₑₛ, il est possible de retrouver la valeur de l'écart-type σ d'un capteur seul. Pour cela, il suffit de diviser l'écart-type σ_{Δ} de Xₘₑₛ - Yₘₑₛ par racine(2), c'est-à-dire environ 1,4.

La répétabilité de la mesure d'un capteur au sens de la présente invention peut ainsi être appréciée à partir de l'écart-type σ_{Δ} de la différence (Xₘₑₛ - Yₘₑₛ) entre deux mesures concurrentes Xₘₑₛ, Yₘₑₛ, du paramètre Z. Une répétabilité de mesure du paramètre Z meilleure que 2%RMS signifie donc également que σ_{Δ} est inférieur ou égal à racine(2)x2%, soit σ_{Δ} ≤ 0,028 x Z, la valeur de Z étant estimée comme la moyenne des mesures Xₘₑₛ, Yₘₑₛ.

La vitesse de l'air vₐᵢᵣ (ou la pression dynamique), dans le cas d'un déplacement sur un tronçon de route exposé au vent peut être mesurée par un anémomètre (respectivement par un capteur de pression différentielle) embarqué sur le vélo. La fréquence d'échantillonnage, supérieure ou égale à 1Hz, permet de garantir que le travail de la force aérodynamique Wₐₑᵣₒ (exprimé plus loin dans l'équation [équ.9], et, par voie de conséquence, le bilan énergétique (exprimé plus loin dans l'équation [équ.8]) et les inconnues le constituant (Cr et/ou CxS et/ou H), soient calculés de manière suffisamment précise le long du tronçon, même lorsque les écoulements d'air sont variables et turbulents.

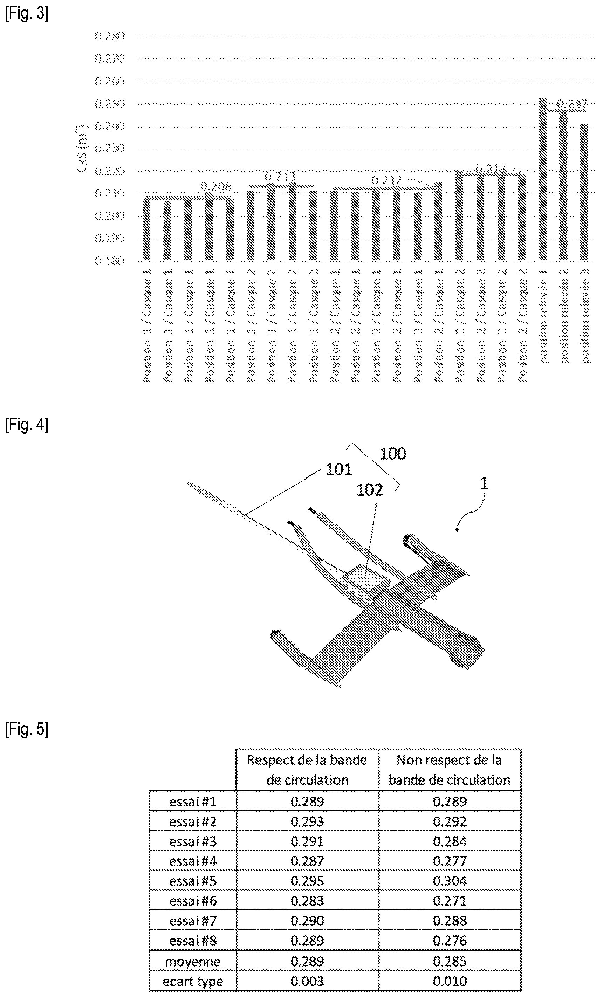

L'anémomètre (ou l'élément de prise de la pression totale du capteur de pression différentielle) est placé dans une zone où l'écoulement de l'air autour du véhicule ne perturbe pas ou peu la lecture de l'air incident. Dans le cas d'un bicycle, une zone à mi-hauteur entre le haut de la roue et le guidon et en avant de 0 à 1m50 du cycliste est privilégiée. Cette zone est atteinte, par exemple grâce à un prolongateur fixé sur un support solidaire du guidon ou de la fourche (figure 4).

De manière préférentielle, la mesure de la vitesse de l'air vₐᵢᵣ ou la mesure de la pression dynamique ΔP peuvent être effectuées grâce à capteur de pression différentielle connecté à une sonde de type Pitot. La vitesse de l'air est déduite de la mesure de pression grâce à la relation suivante : ${V}_{air} = k \sqrt{\frac{2 Δ P}{ρ}}$

Avec ΔP (pression dynamique) la différence entre pression totale et pression statique de l'air aux sorties du tube Pitot, ρ la densité de l'air et k un facteur de calibration qui peut être déterminé lors d'un trajet test aller/retour où le vent moyen est supposé nul.

De manière plus générale la pression dynamique ΔP pourra être estimée via tout type de prise de pression différentielle, à la condition que les deux ports de prise de pression présentent des différences de sensibilité fortes à la pression dynamique. Un facteur de calibration kₚ permettra d'ajuster la pression dynamique ΔP_{réelle} à partir de la mesure de pression différentielle ΔP_{mesurée} via la relation ΔP_{réelle} = kₚ x ΔP_{mesurée}. Ce facteur sera à déterminer en fonction de la différence de sensibilité des ports à la pression dynamique.

La vitesse de l'air dans le cas d'un déplacement non exposé au vent (par exemple dans un hangar, un vélodrome, un gymnase, etc...) pourra être supposée égale à la vitesse du cycliste et mesurée à l'aide d'un tachymètre embarqué par exemple en utilisant la même méthode que celle utilisée pour la mesure des vitesses aux points A et B décrite ci-après.

La mesure de la vitesse du véhicule v peut être basée sur un comptage du nombre de tours de roue dudit véhicule par unité de temps aux points de départ A et d'arrivée B. Selon une variante avantageuse, la mesure de la vitesse du véhicule met en œuvre un ou plusieurs aimant(s) disposé(s) sur la roue et un interrupteur magnétique à lames souples, sensible au passage desdits aimants, placé par exemple sur la fourche dans le cas d'un bicycle. Ledit interrupteur étant couplé à un système électronique de chronométrage capable de détecter les états ouverts et/ou fermés de l'interrupteur avec une résolution inférieure à 500µs (ou une fréquence d'échantillonnage supérieure 2kHz). La vitesse peut être facilement calculée grâce à la relation suivante : $v = \frac{{D}_{roue}}{{Δ}_{top}} \frac{β}{2 π}$ avec Δₜₒₚ le laps de temps mesuré entre deux fronts de tension montants (ou descendants) successifs mesurés aux bornes de l'interrupteur, Dᵣₒᵤₑ le diamètre de la roue et β l'angle entre l'aimant considéré et son prédécesseur (B=2π dans le cas d'une mesure à un seul aimant).

Alternativement, la mesure de la vitesse du véhicule v peut être obtenue à partir d'au moins deux paires de bandes sensibles de détection de roue : chaque paire est dans ce cas disposée de manière à englober le points de départ A et d'arrivée B du tronçon de route T. Lesdites paires de bandes peuvent être constituées d'un matériau sensible à la pression, disposées au sol parallèlement entre elles à une distance respectivement d_{A} et d_{B} autour des points A et B (d_{A} et d_{B} étant avantageusement inférieures à 10m) et placées perpendiculairement à la bande de roulement en couvrant toute sa largeur. Chacune des bandes est apte à délivrer une impulsion électrique au passage du véhicule et est couplée à un système de chronométrage destiné à recevoir les impulsions électriques et à déterminer l'intervalle de temps entre deux impulsions consécutives avec une résolution inférieure à 500µs (ou une fréquence d'échantillonnage supérieure 2kHz). Les vitesses aux points A et B peuvent être calculées simplement comme suit : ${v}_{A} = \frac{{d}_{A}}{{T}_{A}} et {v}_{B} = \frac{{d}_{B}}{{T}_{B}}$

T_{A} et T_{B} étant respectivement les intervalles de temps entre deux impulsions consécutives mesurées lors du passage du véhicule sur le tronçon de route T au niveau des points A et B.

L'énergie motrice Wₘₒₜ peut être mesurée grâce à un capteur de puissance disponible dans le commerce présentant les caractéristiques de répétabilité susmentionnées. Les données transmises par le capteur sont récupérées grâce au protocole de transmission sans fil du capteur (bluetooth, ANT+, etc.). Les procédures de calibration du capteur préconisées par le fabricant sont appliquées avant chaque séance de test.

Dans le cas d'une roue libre, l'énergie peut être supposée nulle et aucun capteur de puissance n'est alors nécessaire. Le cycliste peut alors avantageusement continuer à procéder à un mouvement fictif de pédalage en tournant les jambes sans toutefois appuyer sur les pédales de manière à répliquer une position aérodynamique correspondant à une situation dynamique de pédalage.

Avantageusement, le tronçon de route T présente une longueur L supérieure ou égale à 500m, lorsqu'une énergie motrice est développée par le véhicule au cours du premier déplacement, ou, comme cela sera détaillé plus loin en référence aux méthodes de détermination selon l'invention, au cours d'un autre déplacement sur ledit tronçon. Cependant, lorsque le premier déplacement (ou un autre déplacement) sur le tronçon de route T est effectué en roue libre sur une route plate, ledit tronçon T présente une longueur inférieure ou égale à 300m, préférentiellement de l'ordre de 100m. Avantageusement une route légèrement en pente entre 0 et -1 % de déclivité peut être choisie de façon à maximiser la longueur de la roue libre au-delà de 200m et ainsi minimiser l'impact des incertitudes sur les mesures. Dans ce dernier cas, le tronçon n'est parcouru que dans un sens de circulation.

Lorsque les modes de mise en œuvre de l'étape b) de la séquence préparatoire font appel à des mesures réalisées de manière embarquée (vitesse avec détection de passage d'aimant sur la roue, écoulement de l'air avec anémomètre ou pression dynamique avec capteur de pression différentielle, énergie motrice avec capteur de puissance), il est important de pouvoir synchroniser précisément temporellement les données mesurées avec la distance parcourue entre les points de départ A et d'arrivée B du tronçon de route T. Pour cela, plusieurs options sont possibles.

Selon une première option, le déplacement de l'étape b) est précédé d'une phase d'élan, initiée en un point de mise en mouvement M, M' du véhicule, situé à une distance connue du point de départ A ou d'arrivée B : en pratique, pour plus de simplicité, ladite distance est choisie comme un multiple d'un tour de roue du véhicule ou d'une fraction de tour de roue. Cette distance peut être typiquement de l'ordre de 200m. Ainsi, un passage du véhicule sur le point de départ A ou sur le point d'arrivée B du tronçon de route T, lors du déplacement de l'étape b) (ou d'un autre déplacement), est détecté précisément grâce à un comptage du nombre de tours de roue à partir du point de mise en mouvement M, M'.

Selon une autre option, le passage du véhicule sur le point de départ A ou sur le point d'arrivée B du tronçon de route T peut également être détecté précisément grâce à un système de positionnement par satellite (GNSS). Selon encore une autre option, un passage du véhicule, sur le point de départ A ou sur le point d'arrivée B du tronçon de route T, est détecté précisément grâce à un système de balises radiofréquences positionnées aux points de départ A et/ou d'arrivée B.

La séquence préparatoire selon l'invention définit des conditions optimales pour reconstituer le plus fidèlement possible le bilan d'énergie du véhicule, en particulier pour des trajets test courts (inférieurs à 1km), pour lesquels les variations d'énergie cinétique et d'énergie potentielle (dénivelé) jouent un rôle majeur. La définition d'une bande de circulation restreinte le long du tronçon de route T (étape a) de la séquence préparatoire) assure un excellent niveau de constance de l'énergie potentielle perdue ou acquise par gravité (W_{poids}, exprimée plus loin dans l'équation [équ.10]) et éventuellement celle perdue par roulement (Wᵣₒᵤₗₑₘₑₙₜ, exprimée plus loin dans l'équation [équ.11]), le long du trajet lors du premier déplacement (et des autres déplacements, comme cela sera apparent par la suite).

La mesure de la vitesse v est très précise de manière à connaitre très exactement les variations d'énergie cinétique. De plus, la précision requise sur les mesures des autres paramètres (vₐᵢᵣ, ΔP, Wₘₒₜ) est également très élevée de manière à reconstituer un bilan d'énergie du véhicule fidèle et à permettre in fine la détermination de valeurs représentatives et exactes des coefficients aérodynamiques et/ou de roulement.

### Principe de conservation de l'énergie :

D'un point de vue énergétique le long d'un tronçon de route T présentant une longueur L et un dénivelé H, l'équation [équ.5] énoncée en introduction donne : ${\int }_{0}^{L} \sum F dx = \sum W = {\int }_{0}^{L} m \frac{dv}{dt} dx ,$

Comme *dx* = *V dt,* on peut déduire l'équation [équ.7] suivante : $\sum W = {\int }_{0}^{L} m V dv = 0.5 m \left[{{V}_{final}}^{2}-{{V}_{ini}}^{2}\right]$

En décomposant les travaux générés par chaque force sur un tronçon de route T, nous obtenons : $\sum W = {W}_{areo} + {W}_{poids} + {W}_{roulement} + {W}_{mat} = 0.5 m \left[{{V}_{final}}^{2}-{{V}_{ini}}^{2}\right]$

Avec ${W}_{areo} = - {\int }_{0}^{L} 0.5 ρ CxS {{v}_{air}}^{2} dx ,$ l'énergie aérodynamique, qui peut également s'exprimer comme ${W}_{areo} = - {\int }_{0}^{L} CxS Δ P dx$.

Cette dernière expression de Wₐₑᵣₒ est indépendante de la densité de l'air. Lorsque la pression dynamique ΔP est mesurée à la place de la vitesse de l'air, il n'est donc pas nécessaire de connaître la densité de l'air dans les méthodes de détermination qui vont être décrites plus loin. ${W}_{poids} = - m g H ,$ l'énergie perdue ou acquise par gravité ${W}_{roulement} = - m g {C}_{r} L ,$ l'énergie perdue par roulement ${W}_{mot} = {\int }_{0}^{L} \frac{P}{V} dx = {\int }_{0}^{L} \frac{P}{dx} dt dx = {\int }_{0}^{T} P dt ,$ l'énergie motrice.

On obtient ainsi la relation suivante liant le dénivelé H au reste des paramètres : $H = \frac{0.5}{g} \left[{{V}_{ini}}^{2}-{{V}_{final}}^{2}\right] - CxS \left[\frac{1}{m g}{\int }_{0}^{L} 0.5 ρ {{V}_{air}}^{2} dx\right] - {C}_{r} L + \frac{{W}_{mot}}{m g}$

Les méthodes de détermination des coefficients de friction CxS, Cr d'un véhicule qui vont maintenant être détaillées mettent en œuvre la séquence préparatoire décrite et l'équation [équ.13] ci-dessus, issue du principe de conservation de l'énergie.

### Première méthode de détermination :

La première méthode selon la présente invention permet de déterminer la surface de trainée aérodynamique CxS.

Elle met en œuvre les étapes a) et b) de la séquence préparatoire et comprend ensuite l'étape c) correspondant à la détermination de la surface de trainée aérodynamique CxS à partir de l'équation [équ.13] issue du principe de conservation de l'énergie, et à partir :
- de paramètres connus que sont la masse m du véhicule, l'accélération de la pesanteur g, la densité de l'air ρ (si nécessaire), la longueur du tronçon L, le dénivelé du tronçon H,
- des paramètres mesurés au cours du premier déplacement de l'étape b), et
- du coefficient de roulement Cr connu ou fixé arbitrairement.

La surface de trainée aérodynamique CxS peut s'exprimer ainsi : $CxS = \frac{{K}_{v} + \frac{{W}_{mot}}{mg} - H - {C}_{r} L}{{K}_{a}}$ avec ${K}_{a} = \frac{1}{m g} {\int }_{0}^{L} 0.5 ρ {\left({v}_{air}\right)}^{2} dx = \frac{1}{m g} {\int }_{0}^{L} Δ P dx , {K}_{v} = \frac{0.5}{g} \left[{{V}_{ini}}^{2}-{{V}_{fin}}^{2}\right]$ et *Wₘₒₜ* l'énergie motrice fournie par le véhicule lors du premier déplacement, Vᵢₙᵢ et V_{fin} correspondant respectivement à une vitesse initiale et à une vitesse finale du véhicule, respectivement au point de départ A et au point d'arrivée B du tronçon T lors du premier déplacement, ΔP correspondant à la pression dynamique et vₐᵢᵣ correspondant à la vitesse de l'air mesurée lors du premier déplacement.

Avantageusement, le premier déplacement de l'étape b) est réalisé à grande vitesse : soit, pour un cycliste sur son bicycle, à une vitesse supérieure à 20km/h, par exemple à 45km/h. Cela permet de maximiser les pertes d'énergie aérodynamiques le long du trajet et donc de minimiser l'influence de l'incertitude sur Cᵣ ; cela permet en outre de se rapprocher des conditions de vitesse de course.

Cette première méthode de détermination de la surface de trainée aérodynamique CxS prévoit que le dénivelé H du tronçon soit connu. Il est également envisageable que le dénivelé H du tronçon de route T soit évalué grâce à un instrument de géodésie de type niveau optique 10 (figure 1b) ou tout autre outil topographique adapté (système théodolite par exemple), avec une précision de l'ordre du millimètre, pour être ensuite utilisé dans l'équation [équ.14] ci-dessus. Notons que cette technique de mesure du dénivelé H du tronçon T pourra être appliquée aux autres méthodes de détermination qui le nécessitent.

Le coefficient de roulement Cr est, soit connu, soit fixé de manière arbitraire. Dans le premier cas, une valeur absolue du coefficient aérodynamique CxS pourra être obtenue par la première méthode de détermination ; dans le deuxième cas, la valeur obtenue dudit coefficient ne sera que relative.

Rappelons que la surface de trainée aérodynamique CxS est liée aux conditions de test dans lesquelles le véhicule a opéré le premier déplacement. Appliqué à un cycliste sur son bicycle, le coefficient CxS est représentatif du bicycle, d'une posture, de vêtements, d'un casque du cycliste, etc.

La première méthode de détermination selon l'invention prévoit donc la possibilité de répéter les étapes b) et c) (nouveau déplacement), pour d'autres conditions de test (à savoir, par exemple un autre casque, une autre posture du cycliste...). Les valeurs (absolues ou relatives) du coefficient aérodynamique CxS obtenues pour les différentes conditions de test peuvent alors être comparées pour identifier les conditions plus favorables à l'aérodynamisme du véhicule.

### Deuxième méthode de détermination :

La deuxième méthode selon la présente invention permet de déterminer le coefficient de roulement Cr. Elle met en œuvre les étapes a) et b) de la séquence préparatoire et comprend ensuite l'étape d) correspondant à la détermination du coefficient de roulement Cr, à partir de l'équation [équ.13] issue du principe de conservation de l'énergie, et à partir :
- de paramètres connus que sont la masse m du véhicule, l'accélération de la pesanteur g, la densité de l'air ρ (si nécessaire), la longueur du tronçon L, le dénivelé du tronçon H,
- des paramètres mesurés au cours du premier déplacement, et
- de la surface de trainée aérodynamique CxS connue ou fixée arbitrairement.

Le coefficient de roulement peut s'exprimer comme suit : 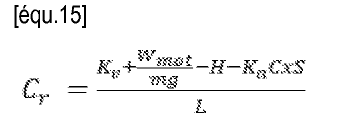 avec 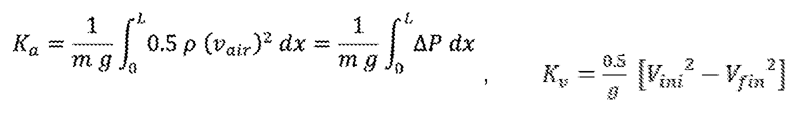 et *Wₘₒₜ* l'énergie motrice fournie par le véhicule lors du premier déplacement, Vᵢₙᵢ et V_{fin} correspondant respectivement à une vitesse initiale et à une vitesse finale du véhicule, respectivement au point de départ A et au point d'arrivée B du tronçon T lors du premier déplacement, ΔP correspondant à la pression dynamique et vₐᵢᵣ correspondant à la vitesse de l'air mesurée lors du premier déplacement.

Avantageusement, le premier déplacement de l'étape b) est réalisé à faible vitesse : soit, dans le cas d'un cycliste sur son bicycle, à une vitesse inférieure ou égale à 20km/h, par exemple 15km/h. Cela permet de rendre l'équation énergétique principalement dépendante des pertes par coefficient de roulement et ainsi minimiser l'influence de l'incertitude des autres paramètres.

Cette deuxième méthode de détermination du coefficient de roulement Cr prévoit que le dénivelé H du tronçon soit connu ou mesuré comme évoqué précédemment.

Le coefficient aérodynamique CxS est, soit connu, soit fixé de manière arbitraire. Dans le premier cas, une valeur absolue du coefficient de roulement Cr pourra être obtenue par la deuxième méthode de détermination ; dans le deuxième cas, la valeur obtenue dudit coefficient ne sera que relative.

Rappelons que le coefficient de roulement Cr est lié aux conditions de test dans lesquelles le véhicule a opéré le premier déplacement. Appliqué à un cycliste sur son bicycle, le coefficient Cr est représentatif des pneumatiques du bicycle, du type de route du tronçon, etc.

La deuxième méthode de détermination selon l'invention prévoit donc la possibilité de répéter les étapes b) et d) (nouveau déplacement), pour d'autres conditions de test (à savoir, par exemple d'autres pneumatiques...). Les valeurs (absolues ou relatives) du coefficient de roulement Cr, obtenues pour les différentes conditions de test, peuvent alors être comparées pour identifier des conditions plus favorables au roulement du véhicule.

### Troisième méthode de détermination :

La troisième méthode selon la présente invention permet de déterminer la surface de trainée aérodynamique CxS.

Elle met en œuvre les étapes a) et b) de la séquence préparatoire et comprend en plus une étape b') selon laquelle le véhicule réalise un deuxième déplacement, sur le tronçon de route T, du point de départ A jusqu'au point d'arrivée B, c'est-à-dire dans le même sens que le premier déplacement de l'étape b). Le deuxième déplacement s'effectue également dans la bande de circulation C et dans les mêmes conditions de test que le premier déplacement. Les mêmes paramètres qu'à l'étape b) sont mesurés, à savoir la vitesse de l'air vₐᵢᵣ ou la pression dynamique ΔP, la vitesse du véhicule v notamment au point de départ A et au point d'arrivée B, et l'énergie motrice Wₘₒₜ si le déplacement n'est pas fait en roue libre. La troisième méthode comprend ensuite une étape c') qui correspond à la détermination de la surface de trainée aérodynamique CxS à partir de l'équation [équ.13] issue du principe de conservation de l'énergie, et à partir :
- de paramètres connus que sont la masse m du véhicule, l'accélération de la pesanteur g, la densité de l'air ρ (si nécessaire), la longueur du tronçon L et
- des paramètres mesurés au cours des premier et deuxième déplacements.

La surface de trainée aérodynamique CxS peut s'exprimer ainsi : 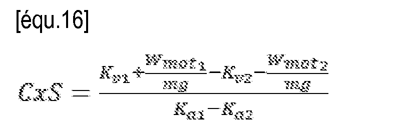 avec 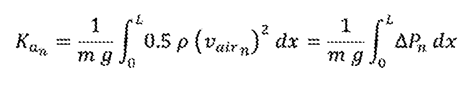 et 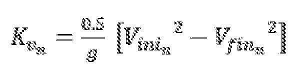 et *Wₘₒₜₙ* l'énergie motrice fournie par le véhicule, V_{ini_n} et V_{fin_n} correspondant respectivement à une vitesse initiale et à une vitesse finale du véhicule pour chaque déplacement, ΔPₙ correspondant à la pression dynamique et v_{air_n} correspondant à la vitesse de l'air, lors du déplacement n, avec n=1,2 correspondant respectivement au premier et au deuxième déplacement.

Avantageusement, l'un parmi le premier et le deuxième déplacement est réalisé à faible vitesse, soit par exemple une vitesse inférieure ou égale à 20km/h, et l'autre est réalisé à grande vitesse, soit par exemple une vitesse supérieure à 20km/h. Cela permet de diminuer l'influence des incertitudes des mesures vₐᵢᵣ ou ΔP, Wₘₒₜ et v sur la discrimination des coefficients Cr et CxS.

Cette troisième méthode de détermination de la surface de trainée aérodynamique CxS s'affranchit de la connaissance du dénivelé H du tronçon T du fait de la réalisation d'un deuxième déplacement. En effet, les dénivelés H exprimés selon l'équation [équ.13], respectivement pour le premier et le deuxième déplacement s'annulent en soustrayant les deux expressions des dénivelés H, ces derniers étant identiques. On s'affranchit également du coefficient de roulement Cr, qui est également éliminé dans la soustraction des deux expressions des dénivelés, comme cela est apparent dans l'équation [équ.16].

La troisième méthode de détermination selon l'invention prévoit bien sûr la possibilité de répéter les étapes b), b' et c'), pour d'autres conditions de test (à savoir, par exemple un autre casque, une autre posture du cycliste...). Les valeurs absolues du coefficient aérodynamique CxS obtenues pour les différentes conditions de test peuvent alors être comparées pour identifier les conditions plus favorables à l'aérodynamisme du véhicule.

### Quatrième méthode de détermination :

La quatrième méthode selon la présente invention permet de déterminer la surface de trainée aérodynamique CxS et le coefficient de roulement Cr.

Elle met en œuvre les étapes a) et b) de la séquence préparatoire et comprend en plus une étape b') selon laquelle le véhicule réalise un deuxième déplacement, sur le tronçon de route T, du point de départ A jusqu'au point d'arrivée B, c'est-à-dire dans le même sens que le premier déplacement de l'étape b). Le deuxième déplacement s'effectue également dans la bande de circulation C et dans les mêmes conditions de test que le premier déplacement. Les mêmes paramètres qu'à l'étape b) sont mesurés, à savoir la vitesse de l'air vₐᵢᵣ ou la pression dynamique ΔP, la vitesse du véhicule v notamment au point de départ A et au point d'arrivée B, et l'énergie motrice Wₘₒₜ si le déplacement n'est pas fait en roue libre.

La quatrième méthode comprend ensuite une étape e) correspondant à la détermination de la surface de trainée aérodynamique CxS et du coefficient de roulement Cr, à partir de l'équation [équ.13] issue du principe de conservation de l'énergie, et à partir :
- de paramètres connus que sont la masse m du véhicule, l'accélération de la pesanteur g, la densité de l'air ρ (si nécessaire), la longueur du tronçon L, le dénivelé du tronçon H,
- des paramètres mesurés au cours des premier et deuxième déplacements.

La surface de trainée aérodynamique CxS et le coefficient de roulement Cᵣ peuvent s'exprimer comme suit : $CxS = \frac{{K}_{v 1} + \frac{{W}_{{mot}_{1}}}{mg} - {K}_{v 2} - \frac{{W}_{{mot}_{2}}}{mg}}{{K}_{a 1} - {K}_{a 2}}$ ${C}_{r} = \frac{{K}_{v 1} + \frac{{W}_{{mot}_{1}}}{mg} - H - {K}_{a 1} CxS}{L}$ avec ${K}_{{a}_{n}} = \frac{1}{m g} {\int }_{0}^{L} 0.5 ρ {\left({v}_{{air}_{n}}\right)}^{2} dx = \frac{1}{m g} {\int }_{0}^{L} Δ {P}_{n} dx , {K}_{{v}_{n}} = \frac{0.5}{g} \left[{{V}_{{ini}_{n}}}^{2}-{{V}_{{fin}_{n}}}^{2}\right]$ et *Wₘₒₜₙ* l'énergie motrice fournie par le cycliste, V_{ini_n} et V_{fin_n} correspondant respectivement à une vitesse initiale et à une vitesse finale du véhicule, ΔPₙ correspondant à la pression dynamique et v_{air_n} correspondant à la vitesse de l'air, lors du déplacement n avec n=1,2 correspondant respectivement au premier et au deuxième déplacement.

Avantageusement, l'un parmi le premier et le deuxième déplacement est réalisé à faible vitesse, soit par exemple une vitesse inférieure ou égale à 20km/h, et l'autre est réalisé à grande vitesse, soit par exemple une vitesse supérieure à 20km/h. Cela permet de diminuer l'influence des incertitudes des mesures vₐᵢᵣ ou ΔP, Wₘₒₜ et v sur la discrimination des coefficients Cr et CxS.

Cette quatrième méthode de détermination de la surface de trainée aérodynamique et du coefficient de roulement Cr considère que le dénivelé H du tronçon T est connu ou mesuré, par exemple par niveau optique comme déjà énoncé.

Elle prévoit par ailleurs la possibilité de répéter les étapes b) et/ou b') et e), pour d'autres conditions de test : par exemple, en référence au cycliste, avec d'autres pneumatiques pour tester le roulement, et/ou d'autres guidons, casques, vêtements ou posture pour tester l'aérodynamisme. Les valeurs absolues des coefficients aérodynamique CxS et de roulement Cr, obtenues pour les différentes conditions de test, peuvent alors être comparées pour identifier des conditions plus favorables à l'aérodynamisme et au roulement du véhicule.

### Cinquième méthode de détermination :

La cinquième méthode selon la présente invention permet de déterminer la surface de trainée aérodynamique CxS et le coefficient de roulement Cr.

Elle met en œuvre les étapes a) et b) de la séquence préparatoire et comprend en plus une étape b") selon laquelle le véhicule réalise un deuxième déplacement, sur le tronçon de route T, du point d'arrivée B jusqu'au point de départ A, c'est-à-dire dans le sens inverse par rapport au premier déplacement de l'étape b). Le deuxième déplacement s'effectue également dans la bande de circulation C et dans les mêmes conditions de test que le premier déplacement. Les mêmes paramètres qu'à l'étape b) sont mesurés, à savoir la vitesse de l'air vₐᵢᵣ ou la pression dynamique ΔP, la vitesse du véhicule v notamment au point de départ A et au point d'arrivée B, et l'énergie motrice Wₘₒₜ si le déplacement n'est pas fait en roue libre.

La cinquième méthode comprend en outre une étape b‴) selon laquelle le véhicule réalise un troisième déplacement, sur le tronçon de route T, du point de départ A jusqu'au point d'arrivée B, c'est-à-dire dans le même sens que le premier déplacement de l'étape b). Le troisième déplacement s'effectue dans la bande de circulation C et dans les mêmes conditions de test que les premier et deuxième déplacements. Les mêmes paramètres qu'à l'étape b) sont mesurés.

La cinquième méthode comprend ensuite une étape e') correspondant à la détermination de la surface de trainée aérodynamique CxS et du coefficient de roulement Cr, à partir de l'équation [équ.13] issue du principe de conservation de l'énergie, et à partir :
- de paramètres connus que sont la masse m du véhicule, l'accélération de la pesanteur g, la densité de l'air ρ, la longueur du tronçon L,
- des paramètres mesurés au cours des premier, deuxième et troisième déplacements.

La surface de trainée aérodynamique CxS et le coefficient de roulement Cᵣ peut s'exprimer comme suit : $CxS = \frac{{K}_{v 1} + \frac{{W}_{{mot}_{1}}}{mg} - {K}_{v 3} - \frac{{W}_{{mot}_{2}}}{mg}}{{K}_{a 1} - {K}_{a 2}}$ ${C}_{r} = \frac{1}{2 L} \left[-\frac{{K}_{v 1} - {K}_{v 3}}{{K}_{a 1} - {K}_{a 2}}\left({K}_{a 1}+{K}_{a 2}\right)+{K}_{v 1}+\frac{{W}_{{mot}_{1}}}{mg}+{K}_{v 2}+\frac{{W}_{{mot}_{2}}}{mg}\right]$ avec ${K}_{{a}_{n}} = \frac{1}{m g} {\int }_{0}^{L} 0.5 ρ {\left({v}_{{air}_{n}}\right)}^{2} dx = \frac{1}{m g} {\int }_{0}^{L} Δ {P}_{n} dx$ et ${K}_{{v}_{n}} = \frac{0.5}{9} \left[{{V}_{{ini}_{n}}}^{2}-{{V}_{{fin}_{n}}}^{2}\right]$ et *W_{motₙ}* l'énergie motrice fournie par le cycliste, V_{ini_n} et V_{fin_n} correspondant respectivement à une vitesse initiale et à une vitesse finale du véhicule, ΔPₙ correspondant à la pression dynamique et v_{air_n} correspondant à la vitesse de l'air, lors du déplacement n avec n=1,2,3 correspondant respectivement au premier, au deuxième et au troisième déplacement.

De manière avantageuse, le premier ou le deuxième déplacement sont réalisés à faible vitesse, par exemple à une vitesse inférieure ou égale à 20km/h. Le troisième déplacement est réalisé à grande vitesse (par exemple, à une vitesse supérieure à 20km/h) si le premier déplacement a été effectué à une vitesse inférieure ou égale à 20km/h ; ou le troisième déplacement est réalisé à faible vitesse (par exemple, une vitesse inférieure ou égale à 20km/h) si le premier déplacement a été effectué à une vitesse supérieure à 20km/h. Cela permet de diminuer l'influence des incertitudes des mesures vₐᵢᵣ ou ΔP, Wₘₒₜ et v lors des trajets et ainsi favoriser une meilleure discrimination des coefficients Cr et CxS.

Cette cinquième méthode de détermination de la surface de trainée aérodynamique CxS permet en outre de déterminer le dénivelé H du tronçon T du fait de la réalisation d'un deuxième déplacement et d'un troisième déplacement. H s'exprime alors de la façon suivante : $H = {K}_{{v}_{n}} - CxS {K}_{{a}_{n}} - {C}_{r} L$ avec n correspondant à un des trois déplacements au choix.

Elle prévoit par ailleurs la possibilité de répéter les étapes b") ou b‴) et e'), pour d'autres conditions de test : par exemple, en référence au cycliste, d'autres pneumatiques pour tester le roulement, et/ou d'autres guidons, casques, vêtements ou posture pour tester l'aérodynamisme. Les valeurs absolues des coefficients aérodynamique CxS et de roulement Cr, obtenues pour les différentes conditions de test, peuvent alors être comparées pour identifier des conditions plus favorables à l'aérodynamisme et au roulement du véhicule.

Notons que des mesures de la pression, de la température et éventuellement du taux d'humidité peuvent être effectuées au cours de l'étape b) de la séquence préparatoire, pour évaluer en temps réel la densité de l'air ρ. Optionnellement, ces mesures peuvent aussi être faites au cours des étapes b'), b") ou b‴) des troisième, quatrième et/ou cinquième méthodes de détermination décrites. Ces mesures peuvent être également omises dans le cas d'une mesure directe de la pression dynamique.

Avantageusement, les déplacements au cours des étapes b), b'), b") et b‴) des troisième, quatrième et/ou cinquième méthodes de détermination sont opérés en roue libre. Cela limite la durée de chaque étape et procure une excellente précision et reproductibilité pour la détermination des coefficients de friction CxS, Cr.

### Exemples de mise en œuvre de méthodes selon l'invention pour un cycliste :

Avant d'effectuer une série de tests, l'utilisateur définit un parcours et trace au sol une bande de circulation à l'aide d'une bombe de peinture. Il dépose des repères visuels aux points de départ A et d'arrivée B espacés de 48 tours de roue exactement. Il trace également deux lignes situées à 91 tours de roues respectivement en amont et en aval des points de départ A et d'arrivée B : ce sont les points M et M'. L'utilisateur installe ensuite un aimant sur sa roue avant ainsi qu'un interrupteur magnétique de détection du passage de ce dernier sur la fourche de son vélo. Le dispositif équipé de sa sonde Pitot, pour la mesure de la vitesse de l'air, est installé sur le vélo au niveau du guidon. L'utilisateur veille à ce que la sonde soit bien horizontale et calibrée. Une recalibration n'est utile que si l'emplacement de la sonde sur le véhicule est modifié.

L'utilisateur monte ensuite sur un pèse-personne avec l'ensemble de l'équipement qu'il utilisera durant les tests pour définir la masse du véhicule. La circonférence de la roue sur laquelle est mesurée la vitesse (typiquement la roue avant) est également déterminée.

La longueur du parcours test - 48 tours de roue - ainsi que les distances des lignes situées en amont et en aval des lignes de départ et d'arrivée - 91 tours de roue - sont fixées. Vélo placé dans le sens aller, l'utilisateur aligne le vélo sur le point M de sorte à placer la roue en contact avec la ligne tracée au sol tout en ayant l'aimant à mi-course par rapport à l'interrupteur magnétique, de manière à ce que la première détection du passage de l'aimant se situe à un demi-tour de roue du point M. Cela permet d'aligner parfaitement les trajets aller et retour. La cinquième méthode de détermination décrite ci-dessus est alors engagée.

Le cycliste s'élance en direction du point A à 15km/h environ. Juste avant de passer ce dernier, il se place en roue libre. Il veille alors à ne strictement pas modifier la position choisie (conditions de test) et à demeurer dans la bande de circulation marquée au sol. Une fois le point B passé, il recommence à pédaler en direction de M'. Il réitère ensuite cette séquence mais en partant du point M' en direction du point B. Une fois cette deuxième roue libre basse vitesse effectuée, il aligne à nouveau sa roue avec le point M. Il peut alors s'élancer vers le point A à une vitesse de 45 km/h environ en maintenant une position identique à celle du test souhaité. Juste avant de passer le point A, il se place en roue libre. Entre les points A et B il veille à ne pas changer sa position et à respecter la bande de circulation C marquée au sol.

Une fois le point B passé, les valeurs des coefficients Cr et CxS peuvent être déterminées (étape e' de la cinquième méthode) ainsi que la hauteur H du parcours (figure 2).

Si l'utilisateur souhaite effectuer un nouveau test, il peut par exemple mettre en œuvre la première méthode de détermination décrite ou réitérer les étapes b") ou b‴) et e) de la cinquième méthode. Il s'élance alors en direction du point A à 45km/h environ. Juste avant de passer ce dernier, il se place en roue libre. Il veille alors à ne strictement pas modifier la position choisie et à respecter la bande de circulation C marquée au sol. Une fois le point B passé, la valeur de CxS représentative des nouvelles conditions de test est déterminée. Il peut alors recommencer la procédure en réitérant cette séquence mais en partant cette fois du point M', en direction du point B, et ainsi de suite pour une pluralité de conditions de test.

La figure 3 donne un exemple de 22 tests en roue libres ayant permis de tester 5 configurations différentes. Il ressort de la série de tests que le casque 2 présente une surface aérodynamique d'environ 0,006m² supérieure au casque 1 et que la position 2 est plus défavorable que la position 1 d'environ 0,005m². Il apparaît ici que les méthodes de détermination selon la présente invention permettent de comparer et discriminer différentes conditions de test grâce à une excellente sensibilité et une grande précision, en conservant un mode opératoire simple, rapide et peu contraignant dans le choix du tronçon de route T.

La figure 5 montre l'effet du respect de la bande de circulation définie dans la présente invention. Le tableau de la figure 5 présente des valeurs de surface de trainée aérodynamique CxS, obtenues lors de 16 essais réalisés dans des conditions de test identiques : 8 essais (selon l'invention) ont été effectués en respectant la bande de circulation C et les valeurs CxS ont été obtenues à partir de la première méthode de détermination selon l'invention; les 8 autres essais ont été effectués sans respecter la bande de circulation (hors invention, donc) et les valeurs CxS ont été obtenues sur la même base de méthode de détermination. Il apparait clairement que la dispersion des résultats est trois fois plus importante pour les essais hors invention par rapport aux essais selon l'invention. L'effet technique du respect de la bande de circulation est d'assurer une constance des paramètres suivants lors des déplacements sur le tronçon de route T : dénivellation, longueur du parcours et également coefficient de roulement lorsque la détermination de la surface de trainée aérodynamique CxS est visée. Respecter cette bande permet de s'assurer que les variations d'énergie mesurées lors des différents tests ne sont pas liées à des variations de ces paramètres.

Inversement le non-respect de la bande de circulation implique des variations sur ces paramètres supposés constants dans plusieurs méthodes de l'état de la technique. Ces variations sont susceptibles d'affecter la reproductibilité des mesures comme énoncé en référence à la figure 5.

### Système intégré :

L'invention concerne également un système intégré 100 pour la mise en œuvre d'une méthode de détermination de la surface de trainée aérodynamique CxS et/ou du coefficient de roulement Cᵣ d'un véhicule, telle que décrite ci-dessus.

Le système intégré 100 comprend un anémomètre 101, présentant une fréquence d'échantillonnage supérieure ou égale à 1Hz et une répétabilité de mesure meilleure que 2% RMS pour une fréquence d'échantillonnage de 1Hz, pour la mesure de la vitesse de l'air vₐᵢᵣ par rapport au véhicule. Alternativement, le système intégré 100 comprend un capteur de pression différentielle, présentant une fréquence d'échantillonnage supérieure ou égale à 1Hz et une répétabilité de mesure meilleure que 4% RMS pour une fréquence d'échantillonnage de 1Hz. Il comprend également un capteur de vitesse, basé sur la détection du nombre de passage d'au moins un aimant disposé sur une roue du véhicule, à une fréquence supérieure ou égale à 2kHz et présentant une répétabilité meilleure que 0,25% RMS, pour la mesure de la vitesse du véhicule v. Enfin, le système intégré 100 comprend un calculateur pour déterminer la surface de trainée aérodynamique CxS et/ou du coefficient de roulement Cᵣ à partir des paramètres mesurés et de paramètres connus ou fixés arbitrairement préenregistrés.

Le système intégré est typiquement capable d'afficher sur un écran 102 les informations présentées sur la figure 2.

Selon une variante, le système intégré 100 comprend des moyens de communication à distance avec un téléphone portable ou un écran, donnant un accès en temps réel aux résultats.

Selon une autre variante avantageuse, ledit système comprend une enveloppe aérodynamique dans laquelle sont intégrés l'anémomètre ou l'élément de prise de la pression totale du capteur de pression différentielle, le capteur de vitesse et le calculateur, l'enveloppe aérodynamique étant disposée à l'avant du véhicule. L'enveloppe est préférentiellement placée dans une zone de pression non ou peu influencée par le véhicule, par exemple entre le haut de la roue avant et le guidon dans le cas d'un vélo via une fixation solidaire du cadre, de la fourche, ou du guidon comme l'illustre la figure 4. Sur cette figure, le système 100 comprend un anémomètre 101 à sonde Pitot ainsi qu'un calculateur capable de guider l'utilisateur dans la mise en œuvre d'une des cinq méthodes de détermination de la surface de trainée aérodynamique et/ou du coefficient de roulement du cycliste sur son vélo ainsi que d'afficher les informations présentées sur la figure 2.

## Revendications

1. Séquence préparatoire pour la détermination de la surface de trainée aérodynamique (CxS) et/ou du coefficient de roulement (Cᵣ) d'un véhicule (1) en conditions réelles de déplacement, sans freinage, sur un tronçon de route (T) défini présentant un point de départ (A) et un point d'arrivée (B), la séquence préparatoire comprenant les étapes suivantes :
a) la définition d'une bande de circulation (C) d'une largeur inférieure ou égale à 1m, le long dudit tronçon de route (T),
b) la réalisation par le véhicule (1) d'un premier déplacement, sur le tronçon de route (T), du point de départ (A) jusqu'au point d'arrivée (B), et dans la bande de circulation (C), au cours duquel sont mesurés les paramètres suivants :
- la vitesse de l'air (vₐᵢᵣ) par rapport au véhicule (1), avec un anémomètre présentant une fréquence d'échantillonnage supérieure ou égale à 1Hz et une répétabilité de mesure meilleure que 2% RMS pour une fréquence d'échantillonnage de 1Hz,
ou la pression dynamique de l'air, avec un capteur de pression différentielle présentant une fréquence d'échantillonnage supérieure ou égale à 1Hz et une répétabilité de mesure meilleure que 4% RMS pour une fréquence d'échantillonnage de 1Hz,
- la vitesse du véhicule (v) aux points de départ (A) et d'arrivée (B) du tronçon de route (T), avec un capteur de vitesse présentant une répétabilité meilleure que 0.25% RMS,
- l'énergie motrice (Wₘₒₜ) fournie par le véhicule (1) le long du tronçon de route (T), avec un capteur de puissance présentant une répétabilité meilleure que 1% RMS, ou la prise en compte d'une énergie motrice nulle si ledit déplacement est effectué en roue libre.

2. Séquence préparatoire selon la revendication précédente, dans laquelle la largeur de la bande de circulation (C) est inférieure ou égale à 50cm, voire à 30cm, voire à 10cm.

3. Séquence préparatoire selon l'une des revendications précédentes, dans laquelle le tronçon de route (T) présente une déclivité descendante de l'ordre de 0 à -1%, et une longueur (L) inférieure ou égale à 500m, préférentiellement de l'ordre de 200m, lorsque le déplacement sur ledit tronçon (T) est effectué en roue libre.

4. Séquence préparatoire selon l'une des revendications précédentes, dans laquelle la mesure de la vitesse du véhicule (v) met en œuvre un ou plusieurs aimant(s) disposé(s) sur la roue et un système de détection du nombre de passages du ou desdits aimant(s) par unité de temps, avec une fréquence d'échantillonnage supérieure ou égale à 2kHz.

5. Séquence préparatoire selon l'une des revendications 1 à 3, dans laquelle la mesure de la vitesse du véhicule (v) est obtenue à partir d'au moins deux bandes sensibles de détection de roue, disposées respectivement au niveau du point de départ (A) et au niveau du point d'arrivée (B) du tronçon de route (T), aptes à délivrer une impulsion électrique au passage du véhicule (1) et couplées à un système de chronométrage présentant une fréquence d'échantillonnage supérieure 2kHz.

6. Méthode de détermination de la surface de trainée aérodynamique (CxS), mettant en œuvre la séquence préparatoire selon l'une des revendications précédentes, la méthode comprenant en outre l'étape suivante :
c) la détermination de la surface de trainée aérodynamique (CxS) à partir d'une équation issue du principe de conservation de l'énergie, et à partir :
- de paramètres connus que sont la masse (m) du véhicule, l'accélération de la pesanteur (g), la densité de l'air (ρ) (si nécessaire), la longueur du tronçon (L), le dénivelé du tronçon (H),
- des paramètres mesurés au cours du premier déplacement, et
- du coefficient de roulement (Cr) connu ou fixé arbitrairement.

7. Méthode de détermination du coefficient de roulement (Cr), mettant en œuvre la séquence préparatoire selon l'une des revendications 1 à 5, la méthode comprenant en outre l'étape suivante :
d) la détermination du coefficient de roulement (Cr) à partir d'une équation issue du principe de conservation de l'énergie, et à partir :
- de paramètres connus que sont la masse (m) du véhicule, l'accélération de la pesanteur (g), la densité de l'air (ρ) (si nécessaire), la longueur du tronçon (L), le dénivelé du tronçon (H),
- des paramètres mesurés au cours du premier déplacement, et
- de la surface de trainée aérodynamique (CxS) connue ou fixée arbitrairement.

8. Méthode de détermination de la surface de trainée aérodynamique (CxS), mettant en œuvre la séquence préparatoire selon l'une des revendications 1 à 5, et comprenant en outre les étapes suivantes :
b') la réalisation par le véhicule d'un deuxième déplacement, sur le tronçon de route, du point de départ jusqu'au point d'arrivée, et dans la bande de circulation, au cours duquel sont mesurés les mêmes paramètres qu'à l'étape b),
c') la détermination de la surface de trainée aérodynamique (CxS) à partir d'une équation issue du principe de conservation de l'énergie, et à partir :
- de paramètres connus que sont la masse (m) du véhicule, l'accélération de la pesanteur (g), la densité de l'air (ρ) (si nécessaire), , la longueur du tronçon (L) et
- des paramètres mesurés au cours des premier et deuxième déplacements.

9. Méthode de détermination de la surface de trainée aérodynamique (CxS) et du coefficient de roulement (Cr), mettant en œuvre la séquence préparatoire selon l'une des revendications 1 à 5, et comprenant en outre les étapes suivantes :
b') la réalisation par le véhicule d'un deuxième déplacement, sur le tronçon de route, du point de départ jusqu'au point d'arrivée, et dans la bande de circulation, au cours duquel sont mesurés les mêmes paramètres qu'à l'étape b),
e) la détermination de la surface de trainée aérodynamique (CxS) et du coefficient de roulement (Cr) à partir d'une équation issue du principe de conservation de l'énergie, et à partir :
- de paramètres connus que sont la masse (m) du véhicule, l'accélération de la pesanteur (g), la densité de l'air (ρ) (si nécessaire), la longueur du tronçon (L), le dénivelé du tronçon (H),
- des paramètres mesurés au cours des premier et deuxième déplacements.

10. Méthode de détermination selon l'une des revendications 6 à 9, dans laquelle le dénivelé du tronçon de route est évalué grâce à un niveau optique ou tout autre outil topographique adapté, avec une précision de l'ordre du millimètre.

11. Méthode de détermination de la surface de trainée aérodynamique (CxS) et du coefficient de roulement (Cr), mettant en œuvre la séquence préparatoire selon l'une des revendications 1 à 5, et comprenant en outre les étapes suivantes :
b") la réalisation par le véhicule d'un deuxième déplacement, sur le tronçon de route, du point d'arrivée jusqu'au point de départ, et dans la bande de circulation, au cours duquel sont mesurés les mêmes paramètres qu'à l'étape b),
b‴) la réalisation par le véhicule d'un troisième déplacement, sur le tronçon de route, du point de départ jusqu'au point d'arrivée, et dans la bande de circulation, au cours duquel sont mesurés les mêmes paramètres qu'à l'étape b) ;
e') la détermination de la surface de trainée aérodynamique (CxS) et du coefficient de roulement (Cr) à partir d'une équation issue du principe de conservation de l'énergie, et à partir :
- de paramètres connus que sont la masse (m) du véhicule, l'accélération de la pesanteur (g), la densité de l'air (ρ) (si nécessaire), la longueur du tronçon (L), et
- des paramètres mesurés au cours des premier, deuxième et troisième déplacements.

12. Méthode de détermination selon l'une des revendications 6 à 11, dans laquelle une mesure de la pression, de la température et éventuellement du taux d'humidité est effectuée au cours de l'étape b) de la séquence préparatoire, pour évaluer en temps réel la densité de l'air ( ).

13. Système intégré pour la mise en œuvre d'une méthode de détermination de la surface de trainée aérodynamique (CxS) et/ou du coefficient de roulement (Cᵣ) d'un véhicule selon l'une des revendications 6 à 12, le système intégré comprenant :
- un anémomètre, présentant une fréquence d'échantillonnage supérieure ou égale à 1Hz, pour la mesure de la vitesse de l'air par rapport au véhicule, ou un capteur de pression différentielle, présentant une fréquence d'échantillonnage supérieure ou égale à 1Hz, pour la mesure de la pression dynamique de l'air,
- un capteur de vitesse, basé sur la détection du nombre de passage d'au moins un aimant disposé sur une roue du véhicule à une fréquence supérieure ou égale à 2kHz, pour la mesure de la vitesse du véhicule,
- un calculateur pour déterminer la surface de trainée aérodynamique (CxS) et/ou du coefficient de roulement (Cᵣ) à partir des paramètres mesurés et de paramètres connus ou fixés arbitrairement préenregistrés.

14. Système intégré selon la revendication précédente, comprenant des moyens de communication à distance avec un téléphone portable ou un écran.

15. Système intégré selon l'une des deux revendications précédentes, comprenant une enveloppe aérodynamique dans laquelle sont intégrés l'anémomètre ou un élément de prise de la pression totale de l'air relié au capteur de pression différentielle, le capteur de vitesse et le calculateur, l'enveloppe aérodynamique étant disposée à l'avant du véhicule.

## Patentansprüche

1. Vorbereitungssequenz zur Bestimmung der aerodynamischen Widerstandsfläche (CxS) und/oder des Rollkoeffizienten (Cᵣ) eines Fahrzeugs (1) unter realen Fahrbedingungen, ohne Bremsen, auf einem definierten Straßenabschnitt (T) mit einem Startpunkt (A) und einem Zielpunkt (B), wobei die Vorbereitungssequenz die folgenden Schritte umfasst:
a) die Definition eines Fahrstreifens (C) mit einer Breite von kleiner oder gleich 1 m entlang des genannten Straßenabschnitts (T),
b) die Durchführung einer ersten Fahrt durch das Fahrzeug (1) auf dem Straßenabschnitt (T) vom Startpunkt (A) bis zum Zielpunkt (B) und innerhalb des Fahrstreifens (C), während der die folgenden Parameter gemessen werden:
- die Luftgeschwindigkeit (v_{Luft}) relativ zum Fahrzeug (1) mit einem Anemometer, das eine Abtastfrequenz von größer oder gleich 1 Hz und eine Messwiederholbarkeit von besser als 2 % RMS bei einer Abtastfrequenz von 1 Hz aufweist,
oder der dynamische Luftdruck mit einem Differenzdrucksensor, der eine Abtastfrequenz von größer oder gleich 1 Hz und eine Messwiederholbarkeit von besser als 4 % RMS bei einer Abtastfrequenz von 1 Hz aufweist,
- die Fahrzeuggeschwindigkeit (v) an den Start- (A) und Zielpunkten (B) des Straßenabschnitts (T) mit einem Geschwindigkeitssensor, der eine Wiederholbarkeit von besser als 0,25 % RMS aufweist,
- die vom Fahrzeug (1) entlang des Straßenabschnitts (T) bereitgestellte Antriebsenergie (Wₘₒₜ) mit einem Leistungssensor, der eine Wiederholbarkeit von besser als 1 % RMS aufweist, oder die Berücksichtigung einer Antriebsenergie von Null, wenn die genannte Fahrt im Leerlauf erfolgt.

2. Vorbereitungssequenz nach dem vorstehenden Anspruch, wobei die Breite des Fahrstreifens (C) kleiner oder gleich 50 cm, vorzugsweise 30 cm, weiter vorzugsweise 10 cm ist.

3. Vorbereitungssequenz nach einem der vorstehenden Ansprüche, wobei der Straßenabschnitt (T) ein Gefälle in der Größenordnung von 0 bis -1 % und eine Länge (L) von kleiner oder gleich 500 m, vorzugsweise in der Größenordnung von 200 m, aufweist, wenn die Fahrt auf dem genannten Abschnitt (T) im Leerlauf erfolgt.

4. Vorbereitungssequenz nach einem der vorstehenden Ansprüche, wobei die Messung der Fahrzeuggeschwindigkeit (v) einen oder mehrere am Rad angeordnete Magnete und ein System zur Erfassung der Anzahl der Durchgänge des oder der genannten Magnete pro Zeiteinheit mit einer Abtastfrequenz von größer oder gleich 2 kHz verwendet.

5. Vorbereitungssequenz nach einem der Ansprüche 1 bis 3, wobei die Messung der Fahrzeuggeschwindigkeit (v) mittels mindestens zwei Raddetektions-Sensorbändern erhalten wird, die jeweils am Startpunkt (A) und am Zielpunkt (B) des Straßenabschnitts (T) angeordnet sind und geeignet sind, beim Passieren des Fahrzeugs (1) einen elektrischen Impuls abzugeben, und die mit einem Zeitmesssystem gekoppelt sind, das eine Abtastfrequenz von größer als 2 kHz aufweist.

6. Verfahren zur Bestimmung der aerodynamischen Widerstandsfläche (CxS) unter Verwendung der Vorbereitungssequenz nach einem der vorstehenden Ansprüche, wobei das Verfahren weiter den folgenden Schritt umfasst:
c) die Bestimmung der aerodynamischen Widerstandsfläche (CxS) anhand einer Gleichung, die aus dem Energieerhaltungssatz abgeleitet ist, und anhand von:
- bekannten Parametern, nämlich der Fahrzeugmasse (m), der Erdbeschleunigung (g), der Luftdichte (ρ) (falls erforderlich), der Länge des Abschnitts (L), dem Höhenunterschied des Abschnitts (H),
- den während der ersten Fahrt gemessenen Parametern, und
- dem bekannten oder willkürlich festgelegten Rollkoeffizienten (Cr).

7. Verfahren zur Bestimmung des Rollkoeffizienten (Cr) unter Verwendung der Vorbereitungssequenz nach einem der Ansprüche 1 bis 5, wobei das Verfahren weiter den folgenden Schritt umfasst:
d) die Bestimmung des Rollkoeffizienten (Cr) anhand einer Gleichung, die aus dem Energieerhaltungssatz abgeleitet ist, und anhand von:
- bekannten Parametern, nämlich der Fahrzeugmasse (m), der Erdbeschleunigung (g), der Luftdichte (ρ) (falls erforderlich), der Länge des Abschnitts (L), dem Höhenunterschied des Abschnitts (H),
- den während der ersten Fahrt gemessenen Parametern, und
- der bekannten oder willkürlich festgelegten aerodynamischen Widerstandsfläche (CxS).

8. Verfahren zur Bestimmung der aerodynamischen Widerstandsfläche (CxS) unter Verwendung der Vorbereitungssequenz nach einem der Ansprüche 1 bis 5, und weiter umfassend die folgenden Schritte:
b') die Durchführung einer zweiten Fahrt durch das Fahrzeug auf dem Straßenabschnitt vom Startpunkt bis zum Zielpunkt und innerhalb des Fahrstreifens, während der dieselben Parameter wie in Schritt b) gemessen werden,
c') die Bestimmung der aerodynamischen Widerstandsfläche (CxS) anhand einer Gleichung, die aus dem Energieerhaltungssatz abgeleitet ist, und anhand von:
- bekannten Parametern, nämlich der Fahrzeugmasse (m), der Erdbeschleunigung (g), der Luftdichte (ρ) (falls erforderlich), der Länge des Abschnitts (L) und
- den während der ersten und zweiten Fahrt gemessenen Parametern.

9. Verfahren zur Bestimmung der aerodynamischen Widerstandsfläche (CxS) und des Rollkoeffizienten (Cr) unter Verwendung der Vorbereitungssequenz nach einem der Ansprüche 1 bis 5,
und weiter umfassend die folgenden Schritte:
b') die Durchführung einer zweiten Fahrt durch das Fahrzeug auf dem Straßenabschnitt vom Startpunkt bis zum Zielpunkt und innerhalb des Fahrstreifens, während derselben Parameter wie in Schritt b) gemessen werden,
e) die Bestimmung der aerodynamischen Widerstandsfläche (CxS) und des Rollkoeffizienten (Cr) anhand einer Gleichung, die aus dem Energieerhaltungssatz abgeleitet ist, und anhand von:
- bekannten Parametern, nämlich der Fahrzeugmasse (m), der Erdbeschleunigung (g), der Luftdichte (ρ) (falls erforderlich), der Länge des Abschnitts (L), dem Höhenunterschied des Abschnitts (H),
- den während der ersten und zweiten Fahrt gemessenen Parametern.

10. Bestimmungsverfahren nach einem der Ansprüche 6 bis 9, wobei der Höhenunterschied des Streckenabschnitts mittels eines Nivelliergeräts oder eines anderen geeigneten topografischen Instruments mit einer Genauigkeit in der Größenordnung eines Millimeters bestimmt wird.

11. Verfahren zur Bestimmung der aerodynamischen Widerstandsfläche (CxS) und des Rollkoeffizienten (Cr), unter Anwendung der vorbereitenden Sequenz nach einem der Ansprüche 1 bis 5, und weiter umfassend die folgenden Schritte:
b") Durchführung einer zweiten Fahrt durch das Fahrzeug auf dem Streckenabschnitt vom Ankunftspunkt zum Startpunkt und auf der Fahrspur, während der dieselben Parameter wie in Schritt b) gemessen werden,
b‴) Durchführung einer dritten Fahrt durch das Fahrzeug auf dem Streckenabschnitt vom Startpunkt zum Ankunftspunkt und auf der Fahrspur, während der dieselben Parameter wie in Schritt b) gemessen werden;
e") die Bestimmung der aerodynamischen Widerstandsfläche (CxS) und des Rollkoeffizienten (Cr) anhand einer Gleichung, die aus dem Energieerhaltungssatz abgeleitet ist, und ausgehend von:
- bekannten Parametern, nämlich der Masse (m) des Fahrzeugs, der Erdbeschleunigung (g), der Luftdichte (ρ) (falls erforderlich), der Länge des Abschnitts (L), und
- Parametern, die während der ersten, zweiten und dritten Fahrt gemessen wurden.

12. Bestimmungsverfahren nach einem der Ansprüche 6 bis 11, wobei eine Messung des Drucks, der Temperatur und gegebenenfalls der Luftfeuchtigkeit während des Schritts b) der Vorbereitungssequenz durchgeführt wird, um die Luftdichte () in Echtzeit zu bewerten.

13. Integriertes System zur Durchführung eines Verfahrens zur Bestimmung der aerodynamischen Widerstandsfläche (CxS) und/oder des Rollkoeffizienten (Cᵣ) eines Fahrzeugs nach einem der Ansprüche 6 bis 12, wobei das integrierte System Folgendes umfasst:
- ein Anemometer mit einer Abtastfrequenz von größer oder gleich 1 Hz zur Messung der Luftgeschwindigkeit relativ zum Fahrzeug, oder einen Differenzdrucksensor mit einer Abtastfrequenz von größer oder gleich 1 Hz zur Messung des dynamischen Luftdrucks,
- einen Geschwindigkeitssensor, der auf der Erfassung der Anzahl der Durchgänge mindestens eines an einem Rad des Fahrzeugs angeordneten Magneten mit einer Frequenz von größer oder gleich 2 kHz basiert, zur Messung der Fahrzeuggeschwindigkeit,
- einen Rechner zur Bestimmung der aerodynamischen Widerstandsfläche (CxS) und/oder des Rollkoeffizienten (Cr) anhand der gemessenen Parameter und bekannter oder willkürlich festgelegter, vorab gespeicherter Parameter.

14. Integriertes System nach dem vorstehenden Anspruch, umfassend Mittel zur Fernkommunikation mit einem Mobiltelefon oder einem Bildschirm.

15. Integriertes System nach einem der beiden vorstehenden Ansprüche, umfassend eine aerodynamische Hülle, in die das Anemometer oder ein Element zur Aufnahme des Gesamtluftdrucks, das mit dem Differenzdrucksensor verbunden ist, der Geschwindigkeitssensor und der Rechner integriert sind, wobei die aerodynamische Hülle an der Vorderseite des Fahrzeugs angeordnet ist.

## Claims

1. Preparatory sequence for determining the aerodynamic drag surface area (CxS) and/or the rolling coefficient (Cᵣ) of a vehicle (1) under actual movement conditions, without braking, on a defined road section (T) having a starting point (A) and an end point (B), the preparatory sequence comprising the following steps:
a) defining a traffic lane (C) with a width less than or equal to 1 m, along said road section (T),
b) carrying out by the vehicle (1) a first movement, on the road section (T), from the starting point (A) to the end point (B), and in the traffic lane (C), during which the following parameters are measured:
- the air speed (vₐᵢᵣ) relative to the vehicle (1), with an anemometer having a sampling frequency greater than or equal to 1 Hz and a measurement repeatability better than 2% RMS for a sampling frequency of 1 Hz,
or the dynamic air pressure, with a differential pressure sensor having a sampling frequency greater than or equal to 1 Hz and a measurement repeatability better than 4% RMS for a sampling frequency of 1 Hz,
- the speed of the vehicle (v) at the starting (A) and end (B) points of the road section (T), with a speed sensor having a repeatability better than 0.25% RMS,
- the driving energy (Wₘₒₜ) supplied by the vehicle (1) along the road section (T), with a power sensor having a repeatability better than 1% RMS, or taking into account a zero driving energy if said movement is performed with freewheeling.

2. Preparatory sequence according to the preceding claim, wherein the width of the traffic lane (C) is less than or equal to 50 cm, or even 30 cm, or even 10 cm.

3. Preparatory sequence according to one of the preceding claims, wherein the road section (T) has a downward slope in the range of 0 to -1%, and a length (L) less than or equal to 500 m, preferably in the range of 200 m, when the movement on said section (T) is performed with freewheeling.

4. Preparatory sequence according to one of the preceding claims, wherein the measurement of the vehicle speed (v) implements one or more magnet(s) disposed on the wheel and a system for detecting the number of passages of said magnet(s) per unit of time, with a sampling frequency greater than or equal to 2 kHz.

5. Preparatory sequence according to one of claims 1 to 3, wherein the measurement of the vehicle speed (v) is obtained based on at least two wheel detection sensing bands, disposed respectively at the starting point (A) and at the end point (B) of the road section (T), capable of issuing an electrical pulse when the vehicle (1) passes through and coupled with a timing system having a sampling frequency higher than 2 kHz.

6. Method for determining the aerodynamic drag surface area (CxS), implementing the preparatory sequence according to one of the preceding claims, the method further comprising the following step:
c) determining the aerodynamic drag surface area (CxS) based on an equation derived from the principle of conservation of energy, and based on:
- known parameters such as the mass (m) of the vehicle, the acceleration of gravity (g), the air density (ρ) (where necessary), the length of the section (L), the height difference of the section (H),
- the parameters measured during the first movement, and
- the known or arbitrarily set rolling coefficient (Cr).

7. Method for determining the rolling coefficient (Cr), implementing the preparatory sequence according to one of claims 1 to 5, the method further comprising the following step:
d) determining the rolling coefficient (Cr) based on an equation derived from the principle of conservation of energy, and based on:
- known parameters such as the mass (m) of the vehicle, the acceleration of gravity (g), the air density (ρ) (where necessary), the length of the section (L), the height difference of the section (H),
- the parameters measured during the first movement, and
- the known or arbitrarily set aerodynamic drag surface area (CxS).

8. Method for determining the aerodynamic drag surface area (CxS), implementing the preparatory sequence according to one of claims 1 to 5, and further comprising the following steps:
b') carrying out by the vehicle a second movement, on the road section, from the starting point to the end point, and in the traffic lane, during which the same parameters as in step b) are measured,
c') determining the aerodynamic drag surface area (CxS) based on an equation derived from the principle of conservation of energy, and based on:
- known parameters which are the mass (m) of the vehicle, the acceleration of gravity (g), the air density (ρ) (where necessary), , the length of the section (L) and
- the parameters measured during the first and second movements.

9. Method for determining the aerodynamic drag surface area (CxS) and the rolling coefficient (Cr), implementing the preparatory sequence according to one of claims 1 to 5, and further comprising the following steps:
b') carrying out by the vehicle a second movement, on the road section, from the starting point to the end point, and in the traffic lane, during which the same parameters as in step b) are measured,
e) determining the aerodynamic drag surface area (CxS) and the rolling coefficient (Cr) based on an equation derived from the principle of conservation of energy, and based on:
- known parameters such as the mass (m) of the vehicle, the acceleration of gravity (g), the air density (ρ) (where necessary), the length of the section (L), the height difference of the section (H),
- the parameters measured during the first and second movements.

10. Determination method according to one of claims 6 to 9, wherein the height difference of the road section is assessed thanks to an optical level or any other suitable topographical tool, with an accuracy in the range of one millimetre.

11. Method for determining the aerodynamic drag surface area (CxS) and the rolling coefficient (Cr), implementing the preparatory sequence according to one of claims 1 to 5, and further comprising the following steps:
b") carrying out by the vehicle a second movement, on the road section, from the end point to the starting point, and in the traffic lane, during which the same parameters as in step b) are measured,
b‴) carrying out by the vehicle a third movement, on the road section, from the starting point to the end point, and in the traffic lane, during which the same parameters as in step b) are measured;
e') determining the aerodynamic drag surface area (CxS) and the rolling coefficient (Cr) based on an equation derived from the principle of conservation of energy, and based on:
- known parameters which are the mass (m) of the vehicle, the acceleration of gravity (g), the air density (ρ) (where necessary), the length of the section (L), and
- the parameters measured during the first, second and third movements.

12. Determination method according to one of claims 6 to 11, wherein a measurement of the pressure, the temperature and optionally the moisture level is carried out during step b) of the preparatory sequence, in order to assess the air density () in real time.

13. Integrated system for implementing a method for determining the aerodynamic drag surface area (CxS) and/or the rolling coefficient (Cᵣ) of a vehicle according to one of claims 6 to 12, the integrated system comprising:
- an anemometer, having a sampling frequency greater than or equal to 1 Hz, for measuring the air speed relative to the vehicle, or a differential pressure sensor, having a sampling frequency greater than or equal to 1 Hz, for measuring the dynamic air pressure,
- a speed sensor, based on detecting the number of passages of at least one magnet disposed on a wheel of the vehicle at a frequency greater than or equal to 2 kHz, for measuring the vehicle speed,
- a computer for determining the aerodynamic drag surface area (CxS) and/or the rolling coefficient (Cr) based on the measured parameters and pre-recorded known or arbitrarily set parameters.

14. Integrated system according to the preceding claim, comprising means of remote communication with a mobile phone or a screen.

15. Integrated system according to one of the two preceding claims, comprising an aerodynamic envelope wherein the anemometer or a total air pressure sampling element connected to the differential pressure sensor, the speed sensor and the computer are integrated, the aerodynamic envelope being disposed at the front of the vehicle.
